(19) Europäisches Patentamt
European Patent Office
Office européen des brevets

(11) **EP 4 769 969 A1**

(12) **EUROPEAN PATENT APPLICATION**
published in accordance with Art. 153(4) EPC

(43) Date of publication:
**01.07.2026 Bulletin 2026/27**

(21) Application number: **24904440.5**

(22) Date of filing: **13.12.2024**

(51) International Patent Classification (IPC):
**H04B 7/06** (2006.01)    **H04L 5/00** (2006.01)
**H04L 25/02** (2006.01)    **H04W 88/08** (2009.01)
**H04W 92/20** (2009.01)

(52) Cooperative Patent Classification (CPC):
**H04W 24/02; H04W 8/26;** H04B 7/024;
H04B 7/0617; H04L 25/02; H04W 88/085;
H04W 92/12

(86) International application number:
**PCT/KR2024/096952**

(87) International publication number:
**WO 2025/127876 (19.06.2025 Gazette 2025/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.12.2023 KR 20230182375
27.11.2024 KR 20240172749**

(71) Applicant: **SAMSUNG ELECTRONICS CO., LTD.
Yeongtong-gu
Suwon-si, Gyeonggi-do 16677 (KR)**

(72) Inventors:
• **OH, Jongho**
  **Suwon-si, Gyeonggi-do 16677 (KR)**
• **HWANG, Wonjun**
  **Suwon-si, Gyeonggi-do 16677 (KR)**
• **BANG, Hyeri**
  **Suwon-si, Gyeonggi-do 16677 (KR)**
• **LEE, Woonsang**
  **Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD FOR TRANSMITTING OR RECEIVING CONTROL PLANE MESSAGE THROUGH FRONTHAUL INTERFACE, AND ELECTRONIC DEVICE FOR PERFORMING SAME**

(57)    Provided are a method of transmitting or receiving a control-plane message through a fronthaul interface and an electronic device performing the method. The method may comprise: receiving, from a radio unit (RU), a management-plane message including information about a control-plane message supported by the RU; generating, based on the management-plane message, a first control-plane message including a field indicating a first user equipment identifier (UE ID) and a first section extension field; and transmitting the first control-plane message to the RU through a fronthaul interface. The first section extension field may include a parameter indicating a number of UE IDs of a user associated with the first UE ID. The first control-plane message may be transmitted at a period longer than a slot.

FIG. 7

**Description**

**Technical Field**

The present disclosure relates to a method for wireless communication based on a fronthaul interface and an electronic device performing the method, and more particularly, to a method of transmitting or receiving a control-plane message through a fronthaul interface and an electronic device performing the method.

**Background Art**

In the related art, as for a base station providing a wireless communication service, a data processing unit or digital unit (or distributed unit (DU)) and a wireless transceiver unit or radio unit (or remote unit (RU)) of the base station are integrally installed together in a cell site. Due to an increase in users and traffic, the base station of the related art is not suitable for establishing a plurality of cell sites. In order to overcome this limitation, a base station is developed to have a structure in which a DU is concentratively arranged in one physical location and only an RU is left in a cell site that actually exchanges wireless signals with a terminal. In this case, the DU and the RU may be connected to each other by an optical cable or a coaxial cable. This base station structure is also being standardized in the 3rd Generation Partnership Project (3GPP), and an open radio access network (O-RAN) as an open network standard applicable to the 5G system is being researched.

A base station based on the O-RAN may include an O-DU and an O-RU. The O-DU and the O-RU may communicate with each other through a fronthaul interface. A fronthaul interface according to the O-RAN standard may be referred to as an open fronthaul interface. The fronthaul interface may include a control user synchronization (CUS) plane and a management (M) plane.

**Disclosure of Invention**

**Solution to Problem**

According to an embodiment of the present disclosure, a method for wireless communication performed by a distributed unit (DU) may include receiving, from a radio unit (RU), a management-plane message including information about a control-plane message supported by the RU, generating, based on the management-plane message, a first control-plane message including a field indicating a first user equipment identifier (UE ID) and a first section extension field, and transmitting the first control-plane message to the RU through a fronthaul interface. The first section extension field may include a parameter indicating a number of UE IDs of a user associated with the first UE ID. The first control-plane message may be transmitted at a period longer than a slot.

According to an embodiment of the present disclosure, a method for wireless communication performed by an RU may include transmitting, to a DU, a management-plane message including information about a control-plane message supported by the RU, and receiving a first control-plane message from the DU through a fronthaul interface. The first control-plane message may include a field indicating a first UE ID and a first section extension field. The first section extension field may include a parameter indicating a number of UE IDs of a user associated with the first UE ID. The first control-plane message may be transmitted at a period longer than a slot.

According to an embodiment of the present disclosure, an electronic device for wireless communication may include at least one processor including a processing circuit, at least one transceiver configured to transmit or receive a signal through a fronthaul interface, and a memory including one or more storage mediums storing one or more instructions. When individually or collectively executed by the at least one processor, the one or more instructions may cause the electronic device to receive, from an RU, a management-plane message including information about a control-plane message supported by the RU, generate, based on the management-plane message, a first control-plane message including a field indicating a first UE ID and a first section extension field, and transmit the first control-plane message to the RU through a fronthaul interface. The first section extension field may include a parameter indicating a number of UE IDs of a user associated with the first UE ID. The first control-plane message may be transmitted at a period longer than a slot.

According to an embodiment of the present disclosure, an electronic device for wireless communication may include at least one processor including a processing circuit, at least one transceiver configured to transmit or receive a signal through a fronthaul interface, and a memory including one or more storage mediums storing one or more instructions. When individually or collectively executed by the at least one processor, the one or more instructions may cause the electronic device to transmit, to a DU, a management-plane message including information about a control-plane message supported by an RU and receive a first control-plane message from the DU through a fronthaul interface. The first control-plane message may include a field indicating a first UE ID and a first section extension field. The first section extension field may include a parameter indicating a number of UE IDs of a user associated with the first UE ID.

**Brief Description of Drawings**

FIG. 1 illustrates a wireless communication system according to an embodiment of the present disclosure.
FIG. 2 illustrates a block diagram of a base station of an open radio access network according to an embodiment of the present disclosure.
FIG. 3 illustrates a block diagram of a distributed unit (DU) according to an embodiment of the present disclosure.
FIG. 4 illustrates a block diagram of a radio unit (RU) according to an embodiment of the present disclosure.
FIG. 5 illustrates Transmit Antenna Switching (TAS) according to an embodiment of the present disclosure.
FIG. 6 illustrates singular value decomposition (SVD) beamforming according to an embodiment of the present disclosure.
FIG. 7 illustrates a flowchart of a method for wireless communication according to an embodiment of the present disclosure.
FIG. 8 illustrates a configuration of a section type according to an embodiment of the present disclosure.
FIG. 9 illustrates a configuration of a section extension according to an embodiment of the present disclosure.
FIG. 10 illustrates a configuration of a section extension according to an embodiment of the present disclosure.
FIG. 11 illustrates a timing of downlink control-plane (C-plane) data transmission/reception between a DU and an RU according to an embodiment of the present disclosure.
FIG. 12 illustrates a configuration of a section type according to an embodiment of the present disclosure.
FIG. 13 illustrates a configuration of a section type including a section extension according to an embodiment of the present disclosure.
FIG. 14 illustrates a configuration of a section type according to an embodiment of the present disclosure.
FIG. 15 illustrates a configuration of a section type including a section extension according to an embodiment of the present disclosure.
FIG. 16 illustrates a flowchart of a method for wireless communication performed by a DU according to an embodiment of the present disclosure.
FIG. 17 illustrates a flowchart of a method for wireless communication performed by an RU according to an embodiment of the present disclosure.

**Mode for the Invention**

The terms used herein are those general terms currently widely used in the art in consideration of functions in the present disclosure, but the terms may vary according to the intentions of those of ordinary skill in the art, precedents, or new technology in the art. Also, in some cases, there may be terms that are optionally selected by the applicant, and the meanings thereof will be described in detail in the corresponding portions of the present disclosure. Thus, the terms used herein should be understood not as simple names but based on the meanings of the terms and the overall description of the present disclosure.

The terms used herein are just for the purpose of describing particular embodiments and are not intended to limit the scope of the present disclosure. As used herein, the singular forms "a," "an," and "the" may include the plural forms as well, unless the context clearly indicates otherwise. Unless otherwise defined, all terms (including technical or scientific terms) used herein may have the same meanings as commonly understood by those of ordinary skill in the art of the present disclosure. The terms defined in commonly used dictionaries may be interpreted as having the same meanings as the contextual meanings of the related art and will not be interpreted in an idealized or overly formal sense unless expressly so defined herein. In some cases, even the terms defined herein may not be interpreted to exclude the embodiments of the present disclosure.

In various embodiments of the present disclosure described below, a hardware-based approach will be described as an example. However, because the various embodiments of the present disclosure include technologies that use both hardware and software, the various embodiments of the present disclosure do not exclude a software-based approach.

In the following description, terms referring to signals (e.g., message, information, preamble, signal, signaling, sequence, and stream), terms referring to resources (e.g., symbol, slot, subframe, radio frame, subcarrier, resource element (RE), resource block (RB), bandwidth part (BWP), and occasion), terms for operation states (e.g., step, operation, and procedure), terms referring to data (e.g., packet, user stream, information, bit, symbol, and codeword), terms referring to channels, terms referring to control information (e.g., downlink control information (DCI), medium access control element (MAC CE), and radio resource control (RRC) signaling), terms referring to network entities, terms referring to components of devices, and the like are just examples for convenience of description. Thus, the present disclosure is not limited to the terms described below and any other terms having equivalent technical meanings may be used.

As used herein, the singular forms "a," "an," and "the" may include the plural forms as well, unless the context clearly indicates otherwise. Unless otherwise defined, all terms (including technical or scientific terms) used herein may have the same meanings as commonly understood by those of ordinary skill in the art of the present disclosure.

Throughout the present disclosure, when something is referred to as "including" an element, one or more other elements may be further included unless specified otherwise. Also, as used herein, terms such as "units" and "modules" may refer to units that perform at least one function or operation, and the units may be implemented as hardware or software or a combination of hardware and software.

The expression "configured to (or set to)" used herein may be replaced with, for example, "suitable for," "having the capacity to," "designed to," "adapted to," "made to," or "capable of" according to cases. The expression "configured to (or set to)" may not necessarily mean "specifically designed to" in a hardware level. Instead, in some case, the expression "a system configured to ..." may mean that the system is "capable of ..." along with other devices or components. For example, "a processor configured to (or set to) perform A, B, and C" may refer to a dedicated processor (e.g., an embedded processor) for performing a corresponding operation, or a general-purpose processor (e.g., a central processing unit (CPU) or an application processor) capable of performing a corresponding operation by executing one or more software programs stored in a memory.

Also, herein, when an element is referred to as being "connected" or "coupled" to another element, the element may be directly connected or coupled to the other element and may also be connected or coupled to the other element through one or more other intervening elements therebetween unless otherwise specified.

Also, herein, the expression "more than" or "less than" may be used to determine whether a particular condition is satisfied or fulfilled; however, this is just a description for representing an example and does not exclude a description of "more than or equal to" or "less than or equal to". A condition described as "more than or equal to" may be replaced with "more than", a condition described as "less than or equal to" may be replaced with "less than", and a condition described as "more than or equal to and less than or equal to" may be replaced with "more than and less than".

Also, although the present disclosure describes various embodiments by using terms used in some communication standards (e.g., 3rd Generation Partnership Project (3GPP), extensible radio access network (xRAN), and open-radio access network (O-RAN)), these are just examples for description. Various embodiments of the present disclosure may be easily modified and applied to other communication systems.

Hereinafter, for convenience of description, the present disclosure may use terms and names defined in the 3GPP Long Term Evolution (3GPP LTE) or New Radio (NR) standards or modified terms and names based thereon. However, the present disclosure is not limited to the above terms and names and may also be similarly applied to systems according to other standards. In the present disclosure, eNB (eNode B) may be used interchangeably with gNB (gNode B) for convenience of description. For example, a base station referred to as an eNB may also be understood as a gNB. In the present disclosure, the term "terminal" may refer to not only a user equipment (UE), a mobile station (MS), a mobile phone, narrowband-Internet of Things (NB-IoT) devices, and sensors but also various wireless communication devices.

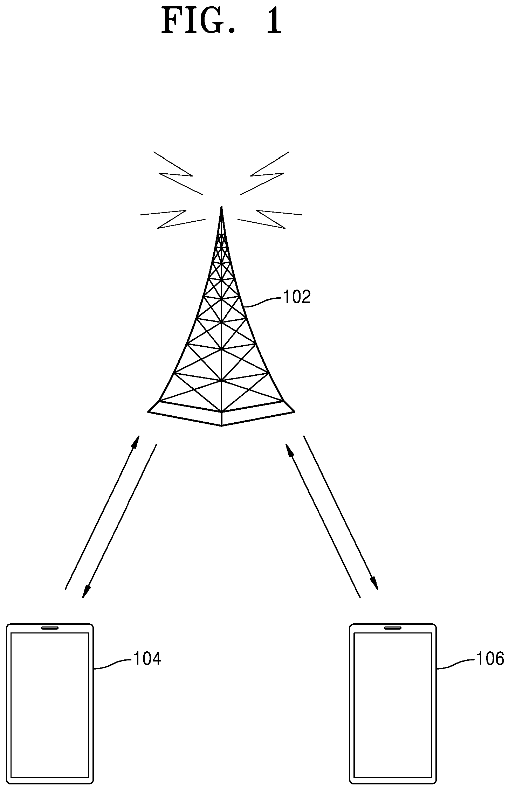

FIG. 1 illustrates a wireless communication system according to an embodiment of the present disclosure.

FIG. 1 illustrates a wireless communication system according to various embodiments of the present disclosure. FIG. 1 illustrates a base station 102, a terminal 104, and a terminal 106 as some of the nodes that use a wireless channel in the wireless communication system. Although FIG. 1 illustrates only one base station, one or more other base stations the same as or similar to the base station 102 may be further included.

The base station 102 may be a network infrastructure that provides radio access to the terminals 104 and 106. The base station 102 may have a coverage defined as a certain geographical area based on the distance within which it may transmit a signal. The base station 102 may also be referred to as an access point (AP), an eNodeB (eNB), a 5th-generation node (5G node), a next-generation nodeB (gNB), a wireless point, a transmission/reception point (TRP), or any other terms having equivalent technical meanings thereof.

Each of the terminal 104 and the terminal 106 may be a device used by a user and may communicate with the base station 102 through a wireless channel. A link from the base station 102 to the terminal 104 or the terminal 106 may be referred to as a downlink (DL). A link from the terminal 104 or the terminal 106 to the base station 102 may be referred to as an uplink (UL). Also, the terminal 104 and the terminal 106 may communicate with each other through a wireless channel. In this case, a device-to-device (D2D) link between the terminal 104 and the terminal 106 may be referred to as a sidelink. The sidelink may be used interchangeably with a PC5 interface.

In some embodiments, at least one of the terminal 104 and the terminal 106 may be operated without involvement by the user. That is, at least one of the terminal 104 and the terminal 106 may be a device performing machine type communication (MTC) and may not be carried by the user. Each of the terminal 104 and the terminal 106 may be referred to as a user equipment (UE), a customer premises equipment (CPE), a mobile station, a subscriber station, a remote terminal, a wireless terminal, an electronic device, a user device, or any other terms having equivalent technical meanings thereof.

The base station 102, the terminal 104, and the terminal 106 may perform beamforming. The base station and the terminals may transmit and receive wireless signals in a relatively low frequency band (e.g., frequency range 1 (FR1) of NR). Also, the base station and the terminals may transmit and receive wireless signals in a relatively high frequency band (e.g., FR2 of NR and millimeter wave (mmWave) band (e.g., 28 GHz, 30 GHz, 38 GHz, and 60 GHz)). In some embodiments, the base station 102 may perform communication with the terminal 110 within a frequency range corresponding to FR1. In some embodiments, the base station may perform communication with the terminal 104 within a frequency range corresponding to FR2. In this case, for improvement of a channel gain, the base station 102, the terminal 104, and the terminal 106 may perform beamforming. Here, beamforming may include transmission beamforming and reception beamforming. For example, the base station 102, the terminal 104, and the terminal 106 may give directivity to a transmission signal or a reception signal. For this purpose, the base station 102 and the terminals 104 and 106 may select serving beams through a beam search or beam management procedure. After the serving beams are selected, subsequent communication may be performed through resources that are in a QCL relationship with resources that have transmitted the serving beams.

Herein, the term 'beam' may refer to a spatial flow of a signal in a wireless channel. For example, a beam of an antenna may be a radiation pattern without restriction to a main lobe. A beam may be formed by one or more antennas (or antenna elements), and this forming process may be referred to as beamforming. Beamforming may include analog beamforming and digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). Also, an IE such as a CSI-RS resource or an SRS resource may be used as a configuration for each reference signal, and this configuration may include information associated with the beam. The information associated with the beam may mean whether the corresponding configuration (e.g., a CSI-RS resource) uses the same spatial domain filter as another configuration (e.g., another CSI-RS resource in the same CSI-RS resource set) or uses a different spatial domain filter, whether it is quasi-co-located (QCL) with a reference signal, or which type (e.g., QCL type A, B, C, or D) it is when QCLed.

When large-scale characteristics of a channel transferring a symbol on a first antenna port may be inferred from a channel transferring a symbol on a second antenna port, the first antenna port and the second antenna port may be evaluated as being in a QCL relationship with each other. For example, the large-scale characteristics may include at least one of a delay spread, a Doppler spread, a Doppler shift, an average gain, an average delay, and a spatial receiver parameter.

FIG. 1 illustrates that both the base station and the terminals perform beamforming; however, various embodiments of the present disclosure are not necessarily limited thereto. In some embodiments, the terminal may or may not perform beamforming. Also, the base station may or may not perform beamforming. That is, only one of the base station and the terminal may perform beamforming, or both the base station and the terminals may not perform beamforming.

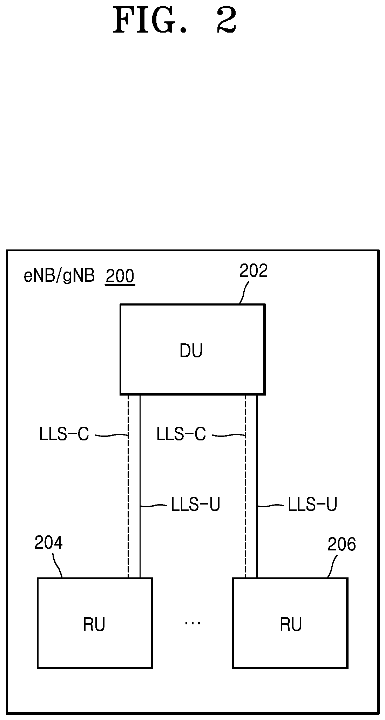

In the related art, in a communication system with a relatively large cell radius of a base station, each base station is installed such that each base station includes the functions of a digital processing unit (or distributed unit (DU)) and a radio frequency (RF) processing unit (or radio unit (RU)). However, as high-frequency bands have been used in the 4th Generation (4G) and/or subsequent communication systems (e.g., 5G) and the cell coverage of base stations has decreased, the number of base stations to cover a particular area has increased. The burden of installation cost on service providers for installing base stations has also increased. In order to minimize the installation cost of a base station, a structure has been proposed in which the DU and RU of a base station are separated from each other, one or more RUs are connected to one DU through a wired network, and one or more geographically-distributed RUs are arranged to cover a particular area. Hereinafter, the arrangement structure and extension examples of a base station according to various embodiments of the present disclosure will be described with reference to FIG. 2.

FIG. 2 illustrates a block diagram of a base station 200 of an open radio access network according to an embodiment of the present disclosure.

Referring to FIG. 2, the base station 200 may include a DU 202 and one or more RUs 204 and 206. A logical link between the DU 202 and the RUs 204 and 206 may be referred to as a fronthaul. For example, the fronthaul may be a logical link connecting the DU 202 and the RUs 204 and 206 to each other. The fronthaul may transport traffic of at least one of a control plane (C-plane), a user plane (U-plane), a synchronization plane (S-plane), or a management plane (M-plane). In an embodiment, the fronthaul may be operated through an Fx interface. For example, an interface such as an enhanced common public radio interface (eCPRI) or a radio-over-ethernet (ROE) interface may be used to operate the fronthaul.

As the communication technology has developed, mobile data traffic has increased, and accordingly, the bandwidth demand required in the fronthaul between a digital unit and a radio unit has increased greatly. In an arrangement such as centralized/cloud radio access network (C-RAN), the DU 202 may be implemented to perform functions for packet data convergence protocol (PDCP), radio link control (RLC), media access control (MAC), and physical (PHY) and the RUs 204 and 206 may be implemented to further perform functions for a PHY layer in addition to an RF function.

The DU 202 may manage an upper layer function of a wireless network. For example, the DU 202 may perform a function of the MAC layer and a portion of the PHY layer. Here, the portion of the PHY layer may be performed at a high-level among the functions of the PHY layer and may include, for example, channel encoding (or channel decoding), scrambling (or descrambling), modulation (or demodulation), and layer mapping (or layer demapping). In an embodiment, when the DU 202 complies with the O-RAN standard, the DU 202 may be referred to as O-DU (O-RAN DU). The O-DU may be a logical node hosting RLC/MAC/High-PHY layers based on a lower layer functional split. When necessary, the DU 202 may be replaced with a first network entity for a base station (e.g., gNB) in embodiments of the present disclosure.

The RUs 204 and 206 may manage a lower layer function of a wireless network. For example, the RUs 204 and 206 may perform a portion of the PHY layer and an RF function. Here, the portion of the PHY layer may be a function among the functions of the PHY layer that is performed at a relatively lower level than the DU 202. For example, the portion of the PHY layer may include inverse fast Fourier transform (iFFT) (or fast Fourier transform (FFT)), CP insertion (CP removal), or digital beamforming. The RUs 204 and 206 may be referred to as an access unit (AU), an access point (AP), a transmission/reception point (TRP), a remote radio head (RRH), a radio unit (RU), or any other terms having equivalent technical meanings thereof. In an embodiment, when the RUs 204 and 206 comply with the O-RAN standard, the RUs 204 and 206 may be referred to as O-RU (O-RAN RU). The O-RU may be a logical node hosting Low-PHY layer and RF processing based on a lower layer functional split. When necessary, the RUs 204 and 206 may be replaced with a second network entity (second network entities) for a base station (e.g., gNB) in embodiments of the present disclosure. In an embodiment, the RUs 204 and 206 may be implemented in a similar way to each other and may operate in a similar way.

FIG. 2 illustrates that the base station includes a DU and an RU; however, various embodiments of the present disclosure are not limited thereto. In some embodiments, the base station may be implemented in a distributed deployment according to a centralized unit (CU) configured to perform functions of upper layers of an access network (e.g., a packet data convergence protocol (PDCP) layer or an RRC layer) and a distributed unit (DU) configured to perform functions of lower layers. The CU may be connected to one or more DUs to perform a function of a high-layer than the DU. In an embodiment, when the CU complies with the O-RAN standard, the CU may be referred to as O-CU (O-RAN CU). The O-CU may be a logical node hosting PDCP, RRC, service data adaptation protocol (SDAP), and/or other control functions. Various embodiments of the present disclosure may be applied to both a base station arrangement including a CU or an arrangement in which a DU is directly connected to a core network without a CU (i.e., the CU and the DU are integrated into a single entity).

In the illustrated embodiment, the DU 202 may be implemented as an O-DU, and the RUs 204 and 206 may be implemented as O-RUs. A path LLS-C and a path LLS-U may respectively provide a control plane and a user plane through a lower layer split (LLS) interface. For example, the C-plane traffic between the DU 202 and the RUs 204 and 206 may be transported through a lower layer split control plane (LLS-C) interface. The U-plane traffic between the DU 202 and the RUs 204 and 206 may be transported through a lower layer split user plane (LLS-U) interface. The LLS interface may be a logical interface between the O-DU and the O-RU when using a lower layer (intra-PHY based) functional split. The LLS-C interface may be a logical interface (e.g., for the control plane) between the O-DU and the O-RU when using a lower layer functional split. The LLS-U interface may be a logical interface (e.g., for the user plane) between the O-DU and the O-RU when using a lower layer functional split.

As the wireless communication technology has developed (e.g., the introduction of the 5G communication system (or New Radio (NR) communication system)), the frequency band used has increased further, and as the cell radius of base stations has become very small, the number of RUs required to be installed has increased further. Also, in the 5G communication system, the amount of data transmitted has increased by 10 times or more, and the transmission capacity of the wired network transmitted through the fronthaul has increased greatly. Due to these factors, the installation cost of the wired network in the 5G communication system may increase very greatly. Thus, in order to lower the transmission capacity of the wired network and reduce the installation cost of the wired network, technologies have been proposed to reduce the transmission capacity of the fronthaul by transferring some functions of the modem of the DU to the RU, and these technologies may be referred to as 'function split'.

In order to reduce the burden on the DU, a method is considered to extend the role of the RU, which manages only an RF function, to some functions of a physical layer. In this case, as the RU performs high-layer functions, the processing amount of the RU may increase and thus the transmission bandwidth in the fronthaul may increase and simultaneously the delay requirement constraint due to response processing may decrease. Moreover, as the RU performs high-layer functions, the virtualization gain may decrease and the size/weight/cost of the RU may increase. Considering the trade-off between the above advantages and disadvantages, it may be required to implement an optimal functional split.

Regarding functions in the PHY layer below the MAC layer, in the case of a downlink (DL) for transmitting a signal to a terminal through a wireless network, the base station may sequentially perform at least some of channel encoding/-scrambling, modulation, layer mapping, antenna mapping, resource element (RE) mapping, in-phase/quadrature-phase (IQ) compression/decompression, digital beamforming (e.g., precoding), inverse fast Fourier transform (iFFT) and cyclic prefix (CP) addition, digital-to-analog conversion (or RF conversion), or analog beamforming. In the case of an uplink (UL) for receiving a signal from a terminal through a wireless network, the base station may sequentially perform at least some of analog beamforming, analog-to-digital conversion (or RF conversion), fast Fourier transform (FFT) and CP removal, filtering (e.g., CP removal, decimation filtering, and/or FFT), digital beamforming (e.g., pre-combining), IQ compression/decompression, RE demapping, channel estimation, detection, equalization, inverse Discrete Fourier Transform (IDFT) channel estimation, layer demapping, demodulation, or decoding/descrambling. The split of the uplink functions and the downlink functions may be defined in various types according to the above trade-off by discussion on needs, standards, and the like between vendors.

Embodiments of the present disclosure may support various modifications of the functional split. In an embodiment, the RF function and the PHY function may be split. Accordingly, the PHY function may not be substantially implemented in the RU, and this functional split may be referred to as 'Option 8'. In an embodiment, the RU may perform iFFT/CP insertion in the DL and FFT/CP removal in the UL among the PHY functions, and the DU may perform the other PHY functions. This functional split may be referred to as 'Option 7-1'. In an embodiment, the RU may perform iFFT/CP insertion in the DL, FFT/CP removal in the UL, and digital beamforming (e.g., precoding) in the UL among the PHY functions, and the DU may perform the other PHY functions. This functional split may be referred to as 'Option 7-2x Category A'. In an embodiment, the RU may further perform digital beamforming in both the DL and the UL, and the DU may perform high-PHY functions (e.g., the other PHY functions) after digital beamforming. For example, among the PHY functions, the RU may perform iFFT/CP insertion and digital beamforming in the DL and may also perform FFT/CP removal and digital beamforming in the UL. This functional split may be referred to as 'Option 7-2x Category B'. In an embodiment, the RU may further perform RE mapping (or RE demapping) in both the DL and the UL, and the DU may perform high-PHY functions after RE mapping (or RE demapping). For example, among the PHY functions, the RU may perform iFFT/CP insertion, digital beamforming, and RE mapping in the DL and may also perform FFT/CP removal, digital beamforming, and RE demapping in the UL. This functional split may be referred to as 'Option 7-2'. In an embodiment, the RU may further perform at least some of antenna port mapping, layer mapping, and modulation (or demodulation) in both the DL and the UL, and the DU may perform high-PHY functions after modulation (or demodulation). For example, among the PHY functions, the RU may perform iFFT/CP insertion, digital beamforming, RE mapping, antenna port mapping, layer mapping, and modulation in the DL and may also perform FFT/CP removal, digital beamforming, RE demapping, channel estimation, layer demapping, and demodulation in the UL. This functional split may be referred to as 'Option 7-3'. In an embodiment, the RU may further perform encoding/scrambling (or decoding/descrambling) in both the DL and the UL, and the DU may perform subsequent high-PHY functions. For example, among the PHY functions, the RU may perform iFFT/CP insertion, digital beamforming, RE mapping, antenna port mapping, layer mapping, modulation, and channel encoding/scrambling in the DL and may also perform FFT/CP removal, digital beamforming, RE demapping, channel estimation, layer demapping, demodulation, and decoding/descrambling in the UL. This functional split may be referred to as 'Option 6'.

In the present disclosure, the high-PHY may refer to physical layer processing processed in the DU of a fronthaul interface. For example, the high-PHY functions may include forward error correction (FEC), encoding/decoding, scrambling/descrambling, and/or modulation/demodulation. Also, the low-PHY may refer to physical layer processing processed in the RU of a fronthaul interface. For example, the low-PHY functions may include FFT/iFFT, digital beamforming, and/or physical random access channel (PRACH) extraction and filtering.

In an embodiment, when a large amount of signal processing is expected such as in an FR1 massive MIMO unit (FR1 MMU), the functional split at a relatively high layer (e.g., Option 7-2x Category B) may be required to reduce the fronthaul capacity. Also, because the functional split at a too high layer (e.g., option 7-3) may complicate a control interface and a plurality of PHY processing blocks may be included in the RU to cause a burden on the implementation of the RU, suitable functional split may be required depending on the arrangement and implementation of the DU and the RU.

In an embodiment, when it is impossible to process precoding of data received from the DU (i.e., when the RU has a limited precoding capability), Option 7-2x Category A or lower functional split (e.g., Option 7-1) may be applied. Conversely, when it is possible to process precoding of data received from the DU, Option 7-2x Category B or high-functional split (e.g., Option 7-3) may be applied.

In an embodiment following the O-RAN standard, Option 7-2x Category A and Option 7-2x Category B may be supported with respect to the functional split. Option 7-2x Category A and Option 7-2x Category B may be distinguished based on whether the O-RU may execute a precoding operation on data received from the O-DU. An O-RU in which precoding is not performed (and thus complexity is low) may be referred to as 'Category A' O-RU, and an O-RU in which precoding is performed may be referred to as 'Category B' O-RU. The O-DU should support Category A O-RU for 8 transmission streams or less. That is, it may be said that the O-DU supports precoding for up to 8 transmission streams. When Option 7-2x Category B is applied, the O-DU may transmit information about modulation symbols, on which layer mapping has been completed, and beamforming information to the O-RU, and the O-RU may convert the modulation symbols into analog signals by applying beamforming to the modulation signals and transmit the analog signals to the terminal through an antenna.

Information that should be transmitted from the O-DU to the O-RU in Option 7-2x may include at least some of information transmitted on the management plane, information transmitted on the synchronization plane, information transmitted on the control plane, or information transmitted on the user plane. The information transmitted on the management plane may be transmitted in both the DL and UL directions as non-real-time transmission and may include information for initial setup or reset between the O-DU and the O-RU. The information transmitted on the synchronization plane may be transmitted in real time and may include information for synchronization or timing between the O-DU and the O-RU. The information transmitted on the control plane may be transmitted in the DL direction as real-time transmission and may include information for the O-DU to transmit a scheduling and/or beamforming command to the O-RU. The information transmitted on the user plane may be transmitted in both the DL and UL directions as real-time transmission and may include DL frequency domain IQ data (including a synchronization signal block (SSB) and a reference signal), UL frequency domain IQ data (including a reference signal such as an SRS), and frequency domain IQ data about a physical random access channel (PRACH). The above 'information' or 'data' may be used interchangeably with the term 'message'.

In an embodiment of the present disclosure, when transmitting a message between the DU (e.g., the DU 202 of FIG. 2) and the RU (e.g., the RU 202 of FIG. 2), the standard of eCPRI and O-RAN are illustratively described as a fronthaul interface. An Ethernet payload of the message may include an eCPRI header, an O-RAN header, and an additional field. Hereinafter, an embodiment of the present disclosure will be described by using the standard terms of eCPRI or O-RAN; however, any other expressions having equivalent meanings to each term may be used instead in an embodiment of the present disclosure.

The application protocol of the fronthaul may include a control plane, a user plane, a synchronization plane, and a management plane. The transport protocol of the fronthaul may use Ethernet and eCPRI that are easy to share with the network. An eCPRI header and an O-RAN header may be included in the Ethernet payload. The eCPRI header (or eCPRI transport common header) may be located at the front end of the Ethernet payload.

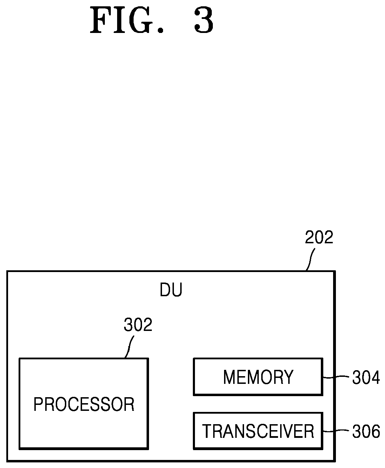

FIG. 3 illustrates a block diagram of a DU 202 according to an embodiment of the present disclosure.

Referring to FIG. 3, the DU 202 of FIG. 2 may include a processor 302, a memory 304, and a transceiver 306. The configuration of the DU 202 illustrated in FIG. 3 is just an example, and an example of the DU performing an embodiment of the present disclosure is not limited to the configuration illustrated in FIG. 3. According to an embodiment, some configurations may be added, deleted, or modified. In an embodiment, the DU 202 may be understood as an electronic device performing functions as a DU.

The processor 302 may control overall operations of the DU 202. For example, the processor 302 may transmit and receive signals through the transceiver 306. The processor 302 may write data in the memory 304 and read the data written in the memory 304. The processor 302 may perform functions of a protocol stack required by the communication standard. In an embodiment, the processor 302 may include at least one processor including processing circuitry. In some embodiments, the processor 302 may be configured to generate a control message including a section extension field. The processor 302 may control the transceiver 306 to transmit the generated control message to the RUs 204 and 206. Additionally or alternatively, the processor 302 may control the DU 202 to perform at least some of the operations according to an embodiment described below.

Additionally or alternatively, the processor 302 may execute one or more instructions of the program stored in the memory 304. In FIG. 3, the processor 302 is illustrated as one element; however, the present disclosure is not limited thereto. In an embodiment of the present disclosure, the processor 302 may include one or more elements. For example, the processor 302 may be implemented as a general-purpose processor such as a central processing unit (CPU), an application processor (AP), or a digital signal processor (DSP), a graphics-only processor such as a graphics processing unit (GPU) or a vision processing unit (VPU), or an artificial intelligence-only processor such as a neural processing unit (NPU).

The processor 302 may include various processing circuits and/or a plurality of processors. For example, the term 'processor' used in the present disclosure, including the claims, may include at least one processor and may additionally or alternatively include various processing circuits. One or more processors may be configured to perform the various functions described in the present disclosure, individually and/or collectively in a distributed manner. As used herein, the "processor", "at least one processor", or "one or more processors" may be configured to perform various functions. However, these terms may cover, without limitation, a situation in which a processor may perform some of the functions and another processor or other processors may perform some others of the functions and a situation in which a single processor may perform all of the functions. Also, the at least one processor may include a combination of processors that perform various functions of the described functions in a distributed manner. The at least one processor may individually or collectively execute program instructions to achieve or perform various functions.

The memory 304 may store instructions, data structures, and program codes readable by the processor 302. For example, the memory 304 may store data such as a basic program, an application program, or configuration information for operation of the DU 202. In an embodiment, the memory 304 may store instructions that may be individually or collectively executed by the processor 302 to cause the DU 202 to perform at least some of the operations of the DU 202 described below. For example, the processor 302 may perform at least some of the operations of the DU 202 described in the present disclosure by executing one or more instructions or codes stored in the memory 304.

The memory 304 may include a flash memory type memory, a hard disk type memory, a multimedia card micro type memory, or a card type memory and may include a nonvolatile memory including at least one of a read-only memory (ROM), an electronically erasable programmable read-only memory (EEPROM), a programmable read-only memory (PROM), a magnetic memory, a magnetic disk, and an optical disk, and/or a volatile memory such as a random-access memory (RAM) or a static random-access memory (SRAM).

The transceiver 306 may perform functions for transmitting/receiving signals in a wired communication environment. The transceiver 306 may include a wired interface for controlling direct connection between devices through a transmission medium (e.g., copper wire or optical fiber). For example, the transceiver 306 may transfer an electrical signal to another device through copper wire or may perform conversion between an electrical signal and an optical signal. The transceiver 306 may be connected to the RU 204. The transceiver 306 may be connected to a core network or may be connected to a CU in a distributed arrangement.

The transceiver 306 may perform functions for transmitting/receiving signals in a wireless communication environment. For example, the transceiver 306 may perform a conversion function between a baseband signal and a bit string according to the physical layer standard of the system. For example, during data transmission, the transceiver 306 may generate complex symbols by encoding and modulating a transmission bit string. Also, during data reception, the transceiver 306 may restore a reception bit string by demodulating and decoding a baseband signal. For example, the transceiver 306 may upconvert a baseband signal into an RF band signal and then transmit the RF band signal through an antenna and may downconvert an RF band signal received through an antenna into a baseband signal. For example, the transceiver 306 may include a transmission filter, a reception filter, an amplifier, a mixer, an oscillator, a digital-to-analog converter (DAC), and/or an analog-to-digital converter (ADC). Also, the transceiver 306 may include a plurality of transmission and reception paths. Also, according to an embodiment, the transceiver 306 may be connected to the core network or may be connected to other nodes (e.g., integrated access backhaul (IAB)).

The transceiver 306 may include an antenna unit. The transceiver 306 may include at least one antenna array including a plurality of antenna elements. In terms of hardware, the transceiver 306 may include a digital circuit and/or an analog circuit (e.g., a radio frequency integrated circuit (RFIC)). Here, the digital circuit and/or the analog circuit may be implemented in a single package. Also, the transceiver 306 may include a plurality of RF chains. The transceiver 306 may perform beamforming. In order to give directivity according to the settings of the processor 302 to signals to be transmitted/received, the transceiver 306 may apply beamforming weights to the signals. According to an embodiment, the transceiver 306 may include a radio frequency (RF) block (or an RF unit). The transceiver 306 may transmit a synchronization signal, a reference signal, system information, a message, a control message, a stream, control information, data, or the like.

The transceiver 306 may transmit and receive signals as described above. Accordingly, all or part of the transceiver 306 may be referred to as a 'transmitter', a 'receiver', or a 'transceiver unit'. Also, in the following description, transmission and reception performed through a wireless channel may be used to mean that the processing described above is performed by the transceiver 306.

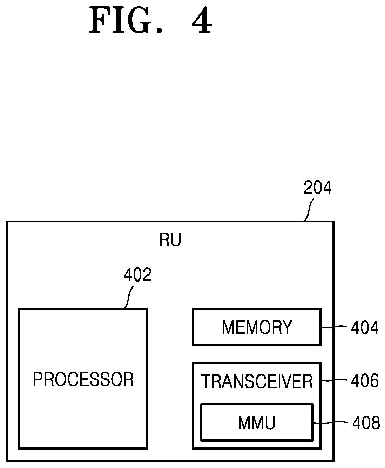

FIG. 4 illustrates a block diagram of an RU 204 according to an embodiment of the present disclosure.

Referring to FIG. 4, the DU 204 of FIG. 2 may include a processor 402, a memory 404, and a transceiver 406. The configuration of the RU 204 illustrated in FIG. 4 is just an example, and an example of the DU performing an embodiment of the present disclosure is not limited to the configuration illustrated in FIG. 4. According to an embodiment, some configurations may be added, deleted, or modified. In an embodiment, the RU 204 may be understood as an electronic device performing functions as an RU.

The processor 402 may control overall operations of the RU 204. For example, the processor 402 may transmit and receive signals through the transceiver 406. The processor 402 may write data in the memory 404 and read the data written in the memory 404. The processor 402 may perform functions of a protocol stack required by the communication standard. In an embodiment, the processor 402 may include at least one processor including processing circuitry. In some embodiments, the processor 402 may be configured to receive a control message including a section extension field. For example, the processor 402 may control the transceiver 406 to receive a control message from the DU 202. Based on the received control message, the processor 402 may control the transceiver 406 to perform beamforming. Additionally or alternatively, the processor 402 may control the RU 204 to perform at least some of the operations according to an embodiment described below. In an embodiment, the processor 402 may be implemented in a similar way to the processor 302 of FIG. 3.

The memory 404 may store instructions, data structures, and program codes readable by the processor 402. For example, the memory 304 may store data such as a basic program, an application program, or configuration information for operation of the RU 204. In an embodiment, the memory 404 may store instructions that may be individually or collectively executed by the processor 402 to cause the RU 204 to perform at least some of the operations of the RU 204 described below. For example, the processor 402 may perform at least some of the operations of the RU 204 described in the present disclosure by executing one or more instructions or codes stored in the memory 404. In an embodiment, the memory 404 may be implemented in a similar way to the memory 304 of FIG. 3.

The transceiver 406 performs functions for transmitting/receiving signals through a wireless channel. For example, the transceiver 406 may upconvert a baseband signal into an RF band signal and then transmit the RF band signal through an antenna and may downconvert an RF band signal received through an antenna into a baseband signal. For example, the transceiver 406 may include a transmission filter, a reception filter, an amplifier, a mixer, an oscillator, a digital-to-analog converter (DAC), and/or an analog-to-digital converter (ADC).

Also, the transceiver 406 may include a plurality of transmission/reception paths. Furthermore, the transceiver 406 may include an antenna unit. In terms of hardware, the transceiver 406 may include a digital circuit and/or an analog circuit (e.g., an RFIC). Here, the digital circuit and/or the analog circuit may be implemented in a single package. Also, the transceiver 406 may include a plurality of RF chains.

The transceiver 406 may include a massive multi-input multi-output (MIMO) unit 408. The MMU 408 may include at least one antenna array including a plurality of antenna elements. The MMU 408 may perform beamforming. In order to give directivity according to the settings of the processor 402 to signals to be transmitted/received, the MMU 408 may apply beamforming weights to the signals. The MMU 408 may simultaneously transfer data to a plurality of users (or counterpart devices). In an embodiment, the MMU 408 may include a radio frequency (RF) block (or an RF unit). In an embodiment, the MMU 408 may perform channel estimation on the channel between the base station 200 and another device. For example, the MMU 408 may estimate the characteristics of the channel between the terminal and the base station 200 based on the SRS received from the terminal.

The transceiver 406 may transmit/receive signals. The transceiver 406 may transmit a downlink signal. The downlink signal may include a synchronization signal (SS), a reference signal (RS) (e.g., a cell-specific reference signal (CRS), a demodulation (DM)-RS), system information (e.g., master information block (MIB), system information block (SIB), remaining system information (RMSI), other system information (OSI)), configuration message, control information, or downlink data. Also, the transceiver 406 may receive an uplink signal. The uplink signal may include a random access-related signal (e.g., a random access preamble (RAP) (or message 1 (Msg1)) or message 3 (Msg3)), a reference signal (e.g., SRS or DM-RS), or a power headroom report (PHR).

The transceiver 406 may transmit and receive signals as described above. Accordingly, all or part of the transceiver 406 may be referred to as a 'transmitter', a 'receiver', or a 'transceiver unit'. Also, in the following description, transmission and reception performed through a wireless channel may be used to mean that the processing described above is performed by the transceiver 406.

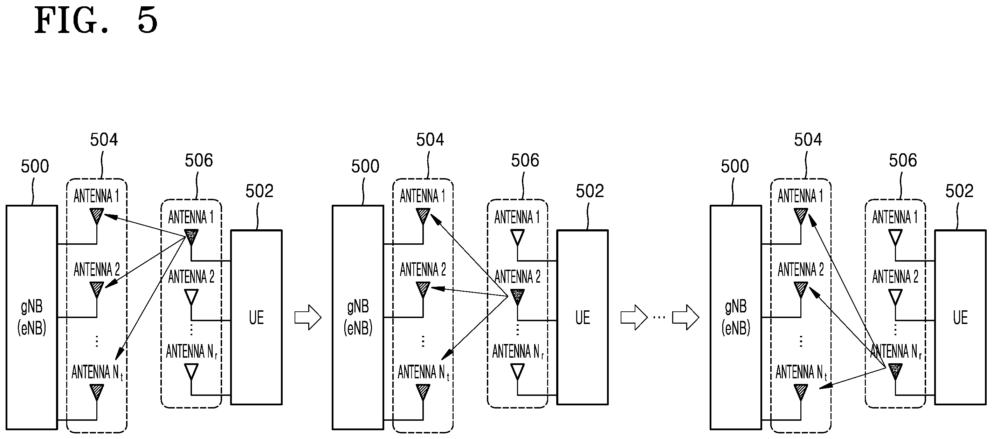

FIG. 5 illustrates Transmit Antenna Switching (TAS) according to an embodiment of the present disclosure.

Referring to FIG. 5, a base station 500 may include $N_t$ antennas 504, and a UE 502 may include $N_r$ antennas 506 (where $N_t$ and $N_r$ are natural numbers). The UE 502 may transmit a signal (e.g., SRS) to the base station 500 by using at least some of the $N_r$ antennas 506. For example, the UE 502 may include a transmission circuit including at least one of a power amplifier (PA), a low noise amplifier (LNA), a duplexer, a switch, or a filter. The base station 500 may perform channel estimation on one or more channels between the base station 500 and the UE 502, based on the signals received from the UE 502.

When the UE 502 transmits an SRS to the base station 500, it may be difficult to use the $N_r$ antennas 506 simultaneously. Accordingly, in order to transmit an SRS, the UE 502 may perform a TAS operation to switch the $N_r$ antennas 506. According to the TAS operation, the UE 502 may sequentially connect the transmission circuit to the $N_r$ antennas 506. For example, the UE 502 may transmit an SRS to the base station 500 by using a first antenna and then transmit an SRS to the base station 500 by using a second antenna. Thus, the UE 502 may transmit an SRS $N_r$ times by performing a TAS operation.

The base station 500 may receive an SRS by using the $N_t$ antennas 504 simultaneously. Based on $N_r$ SRS receptions using the $N_t$ antennas 504, the base station 500 may obtain an $N_r \times N_t$ channel matrix. For example, the base station 500 may estimate one or more characteristics of each of one or more channels between the UE 502 and the base station 500 based on the received SRSs and obtain a channel matrix as a result thereof.

The SRS may be periodically transmitted throughout the frequency domain. The base station 500 may receive an SRS and estimate a channel state in a particular frequency resource. The base station 500 may calculate one or more channel state information elements such as path loss, signal attenuation, delay spread, reflection, multipath fading, Doppler shift, signal-to-noise ratio (SNR), and signal-to-interference-plus-noise ratio (SNR) based on the received SRS. By using the periodically-transmitted SRS, the base station 500 may periodically update the channel state information. By using the obtained channel information, the base station 500 may perform beamforming or optimize resource allocation.

In an embodiment, the channel matrix may be a channel state information (CSI) matrix between the reception antennas of the base station 500 (e.g., the $N_t$ antennas 504) and the transmission antennas of the UE 502 (e.g., the $N_r$ antennas 506). The base station 500 may use advanced beamforming for co-channel and inter-user interference mitigation. In an embodiment, the base station 500 may use singular value decomposition (SVD) beamforming. For example, the base station 500 may design a precoding matrix by applying SVD to an estimated channel (e.g., a channel matrix).

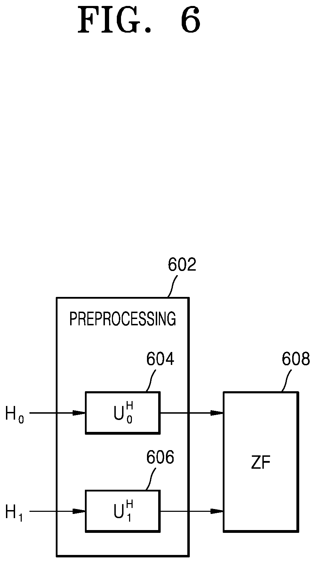

FIG. 6 illustrates SVD beamforming according to an embodiment of the present disclosure.

Referring to FIG. 6, the base station 500 of FIG. 5 may apply SVD to an $N_r \times N_t$ channel matrix. SVD may be a process of factorizing a real or complex matrix into individual matrixes. It may be used to decompose the MIMO channel into independent and parallel subchannels. As described above with reference to FIG. 5, when the UE 502 supports a TAS function for SRS transmission, the base station 500 may obtain different channel information corresponding to each transmission antenna. All channel information identified by a unique ueId (e.g., UE identifier or UE ID) may be used for beamforming weight calculation. When the base station 500 may specify these channel matrixes belong to the UE 502, the base station 500 may use an advanced beamforming algorithm (e.g., SVD-based beamforming) to mitigate co-channel interference and improve transmission reliability.

By applying SVD, the channel matrix may be decomposed into an $N_r \times N_r$ orthogonal matrix U, an $N_r \times N_t$ matrix $\Sigma$ having only non-negative diagonal elements, and an $N_t \times N_t$ orthogonal matrix V. For example, the base station 500 may apply SVD based on Equation 1.

[Equation 1]

$$\mathbf{H} = \mathbf{U}\Sigma\mathbf{V}^H$$

In Equation 1, H may be a matrix for an estimated channel. For example, H may be the $N_r \times N_t$ channel matrix obtained in FIG. 5. The matrix $\Sigma$ may be a diagonal matrix including singular values, and each singular value may correspond to a channel gain. The matrix U and the matrix V may be unitary matrixes. $V^H$ may be a Hermitian matrix of the matrix V. For example, $V^H$ may represent a singular vector in the transmission direction.

In block 602, the base station 500 may preprocess the received signal by using the matrix U derived by using Equation 1. The base station 500 may preprocess the received signal by using the Hermitian matrix $U^H$ of the matrix U. For example, the base station 500 may obtain a matrix $G = U^H H$ for a given channel matrix H. In an embodiment, when the matrix H is decomposed through SVD as in Equation 1, the matrix G may be represented as $G = U^H H = U^H U \Sigma V^H = \Sigma V^H$. The matrix G may represent an effective channel preprocessed in a diagonalized state of the channel matrix. By using the matrix G, zero-forcing (ZF) beamforming may be performed in block 608.

For example, by applying SVD to a channel matrix $H_0$, the base station 500 may obtain a matrix $U_0$ corresponding to the channel matrix $H_0$ and a Hermitian matrix $U_0^H$ 604 of $U_0$. By applying SVD to a channel matrix $H_1$, the base station 500 may obtain a matrix $U_1$ corresponding to a channel matrix $H_1$ and a Hermitian matrix $U_1^H$ 606 of $U_1$. In block 602, by using the matrixes $H_0$, $H_1$, $U_0^H$ 604, and $U_1^H$ 606, the base station 500 may obtain a matrix G as in Equation 2. In Equation 2, $G_0$ may be a channel corresponding to the channel matrix $H_0$, and $G_1$ may be a channel corresponding to the channel matrix $H_1$.

[Equation 2]

$$\mathbf{G} \triangleq \begin{bmatrix} \mathbf{G}_0 \\ \mathbf{G}_1 \end{bmatrix} = \begin{bmatrix} \mathbf{U}_0^H \mathbf{H}_0 \\ \mathbf{U}_1^H \mathbf{H}_1 \end{bmatrix}$$

Thereafter, in block 608, ZF beamforming may be performed based on the matrix G. Accordingly, a reception signal y may be represented as in Equation 3.

[Equation 3]

$$\mathbf{y} = \mathbf{HWx} = \begin{bmatrix} \mathbf{U}_0 & \mathbf{0} \\ \mathbf{0} & \mathbf{U}_1 \end{bmatrix} \mathbf{GG}^H (\mathbf{GG}^H)^{-1} \begin{bmatrix} \mathbf{x}_0 \\ \mathbf{x}_1 \end{bmatrix} = \begin{bmatrix} \mathbf{U}_0 \mathbf{x}_0 \\ \mathbf{U}_1 \mathbf{x}_1 \end{bmatrix}, \text{where } \mathbf{H} = \begin{bmatrix} \mathbf{H}_0 \\ \mathbf{H}_1 \end{bmatrix} = \begin{bmatrix} \mathbf{U}_0 & \mathbf{0} \\ \mathbf{0} & \mathbf{U}_1 \end{bmatrix} \mathbf{G}$$

In Equation 3, "y" may be a reception signal, a matrix W may be a beamforming matrix (or a precoding matrix), and "x" may be a transmission signal. For example, the matrix W may be based on the matrix G obtained through SVD and ZF beamforming. In Equation 3, it may correspond to $W = G^H(GG^H)^{-1}$.

In an embodiment, the matrix $H_0$ may represent channel information corresponding to the first antenna of the transmitter, and the matrix $H_1$ may represent channel information corresponding to the second antenna of the transmitter. For example, the matrix $H_0$ may include information associated with the channel between antenna 1 of the UE 502 and the base station 500 of FIG. 5, and the matrix $H_1$ may include information associated with the channel between antenna 2 of the UE 502 and the base station 500. Accordingly, the base station 500 may perform SVD beamforming for each channel with respect to each antenna of the UE 502. In an embodiment, $H_0$ may be a channel matrix at a first time point, and the matrix $H_1$ may be a channel matrix at a second time point. In an embodiment, $H_0$ may be a channel matrix between the base station 500 and the first UE (e.g., the UE 502), and the matrix $H_1$ may be a channel matrix between the base station 500 and the second UE.

In an embodiment, 'SVD beamforming' may refer to beamforming based on SVD. 'Performing SVD processing' may include applying SVD to the channel matrix H. In an embodiment, 'performing beamforming' may include obtaining (or calculating or deriving) a matrix G based on the channel matrix H and the corresponding matrix U in block 602 and applying ZF beamforming in block 608. Accordingly, by performing beamforming, the reception signal y of Equation 3 may be obtained.

In order to perform SVD beamforming in FIG. 6, the channel matrix H may need to be obtained in advance. For example, in order to perform SVD beamforming, the base station 500 may have to perform channel estimation in advance. In an embodiment, in the base station 200 of FIG. 2, channel estimation may be performed in the DU 202, and SVD beamforming may be performed in the RU 204/206. Thus, in order to perform SVD beamforming, the DU 202 may need to provide channel information including the channel matrix H to the RU 204/206. In an embodiment, in the base station 200, channel estimation and SVD beamforming may be performed in the RU 204/206. Thus, the DU 202 may need to transmit a command to the RU 204/206 to perform channel estimation and SVD beamforming.

When the UE 502 supports TAS as in the embodiment illustrated in FIG. 5, the RU 204 of the base station 500 may perform SVD beamforming based on the channel information collected for each antenna of the UE 502. In order to indicate the antenna of the UE 502 associated with the channel information, an identifier of the UE 502 and an identifier indicating a corresponding antenna among the antennas 506 of the UE 502 may be required. Thus, in order to perform SVD beamforming, the RU 204 may need to obtain information including the identifier of the UE 502 and the identifiers of the antennas 506 of the corresponding UE 502 together with the channel information from the DU 202. In response to obtaining the channel information and the information for identifying each antenna of the UE 502, the RU 204 may perform SVD beamforming.

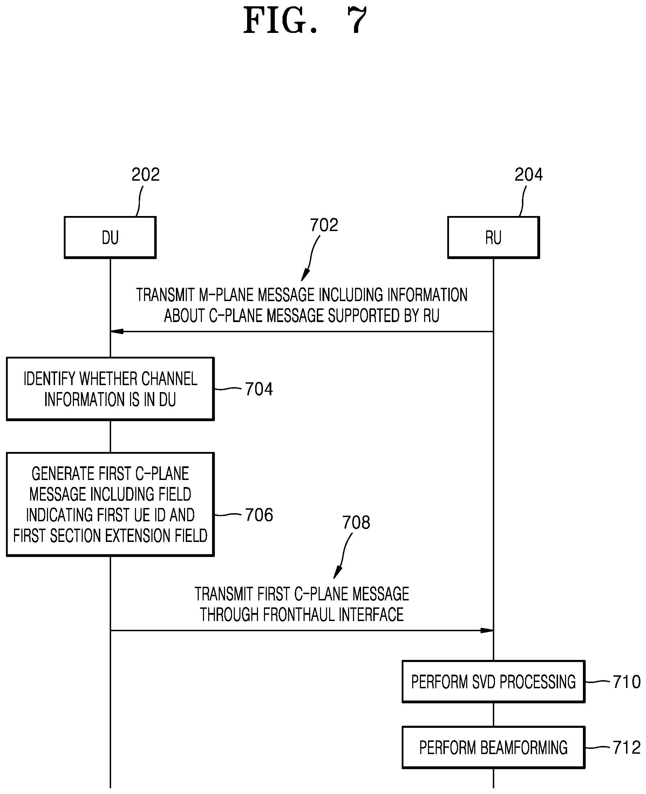

FIG. 7 illustrates a flowchart of a method for wireless communication according to an embodiment of the present disclosure.

Referring to FIG. 7, the method for wireless communication may be performed by the DU 202 and the RU 204 of FIG. 2. However, the present disclosure is not limited thereto, and operations 702 to 712 may be individually or collectively performed by any electronic device. The method for wireless communication according to an embodiment of the present disclosure is not limited to that illustrated in FIG. 7, and any of the operations illustrated in FIG. 7 may be omitted or operations not illustrated in FIG. 7 may be further included. In some embodiments, the order of at least some of operations 702 to 714 may be modified.

In operation 702, the RU 204 may transmit, to the DU 202, an M-plane message including information about a C-plane message supported by the RU 204. The information about the C-plane message may include information indicating whether the MMU 408 supports the C-plane messages of a particular section type including a particular section extension.

In operation 704, the DU 202 may identify whether channel information is in the DU 202. For example, the DU 202 may identify whether a channel estimation result is in the DU 202. Based on the channel estimation result in the DU 202, the DU 202 may identify that channel information is in the DU 202. The DU 202 may identify whether the DU 202 has performed channel estimation and the channel matrix H is stored in the memory 304 of the DU 202 as a result thereof. Based on the channel matrix H stored in the memory 304, the DU 202 may identify that channel information is in the DU 202.

In an embodiment, based on that the channel estimation result is not in the DU 202 or the channel matrix H is not stored in the memory 304, the DU 202 may identify whether a channel estimation function is allocated to the DU 202 or the RU 204. For example, the DU 202 may identify whether the MMU 408 of the RU 204 may perform channel estimation. Based on that the channel estimation function is allocated to the DU 202, the DU 202 may perform channel estimation, store the result of the channel estimation (e.g., channel information) in the memory 304, and identify that channel information in the DU 202. Based on the that the channel estimation function is allocated to the RU 204, the DU 202 may identify that channel information is not in the DU 202.

In operation 706, the DU 202 may generate a first C-plane message including a field indicating a first UE identifier (UE ID) and a first section extension field. For example, the first C-plane message may be a section type including a field indicating a first UE ID. Information included in the section type and the first section extension field of the first C-plane message will be described below in detail.

In an embodiment, based on identifying that channel information is in the DU 202, the DU 202 may generate a first C-plane message including channel information per UE. In an embodiment, based on identifying that channel information is not in the DU 202, the DU 202 may generate a first C-plane message including a field for commanding the RU 204 to perform a channel estimation operation.

In operation 708, the DU 202 may transmit the first C-plane message to the RU 204 through the fronthaul interface. For example, the DU 202 may transmit the first C-plane message during a transmission window for the control plane. The first control-plane message may be transmitted at a period longer than a slot. For example, the transmission period of the first C-plane message may be longer than a period of a slot. The DU 202 may transmit the first C-plane message regardless of the transmission window for the control plane.

In operation 710, the RU 204 may perform SVD processing. For example, by using the information included in the first C-plane message, the RU 204 may perform the SVD processing described with reference to FIG. 6. In an embodiment, the first C-plane message may include channel information, and the RU 204 may perform SVD processing by using the channel information included in the first C-plane message. In an embodiment, the first C-plane message may request the RU 204 to perform channel estimation, and in response to the first C-plane message, the RU 204 may perform channel estimation and perform SVD processing based on the channel estimation result.

In operation 712, the RU 204 may perform beamforming. For example, the RU 204 may obtain a matrix (matrixes) associated with the channel information through operation 710. By using the matrix (matrixes) obtained in operation 710, the RU 204 may perform beamforming. For example, the RU 204 may perform the SVD-based beamforming (e.g., ZF beamforming) described above with reference to FIG. 6. The RU 204 may calculate a suitable beamforming weight for a particular slot based on the SVD and/or ZF.

The SVD beamforming performed based on operations 710 and 712 may be included in channel information-based beamforming. The DU 202 may provide per-UE channel information to the RU 204 periodically (generally less frequently than every slot) by using a C-plane message of a particular section type. The DU 202 may provide scheduling information to the RU 204 on a slot-by-slot basis by using a C-plane message of a particular section type. By using the scheduling information together with the channel information, the RU 204 may calculate suitable beamforming weights for co-scheduled UEs with respect to the corresponding slot (e.g., in the way described with reference to FIGS. 5 to 7).

As illustrated in FIG. 7, the C-plane message may be exchanged between the DU and the RU. The main purpose of the C-plane messages may be to transmit data-associated control information (e.g., scheduling and beamforming commands) required for processing user data. A common frame format including a transport layer and an application layer should be used for the C-plane messages. The transport layer may include an eCPRI common header or an IEEE 1914.3 common header including a corresponding field used to represent the message type, and the application layer may include a field required for control and synchronization. In the application layer, "section" may define the characteristics of U-plane data transferred or received in a beam with a pattern ID. The application layer may be in the transport layer payload and may include a common header for time reference and may be followed by particular information and parameters depending on the section type in use. A plurality of sets of section data with the same section type value may be lined up one after another in the payload. A set of section data with different section type values should be transmitted in a separate C-plane message (i.e., different section type values should not be mixed in a single C-plane message payload).

In order to define the type of a message transmitted on the control plane, a section type may be defined. The section type may represent the purpose of a control message transmitted on the control plane. For example, the purpose of each section type may be as described in Table 1.

[Table 1]

| Section Type | Target Scenario | Remarks |
|---|---|---|
| 0 | Unused Resource Blocks or symbols in Downlink or Uplink | Indicates to the O-RU that certain Resource Blocks or symbols will not be used (idle periods, guard periods). Likewise, there are no associated U-Plane message containing IQ data for this Section Type. The purpose is to inform the O-RU that transmissions may be halted during the specified idle interval for, e.g., power-savings or to provide an interval for calibration. |
| 1 | Most DL/UL radio channels | Here, "most" refers to channels not requiring time or frequency offsets such as are needed for mixed-numerology channels |
| 2 | Reserved for future use | |
| 3 | PRACH and mixed-numerology channels | Channels requiring time or frequency offsets or different-than-nominal SCS values |
| 4 | Slot Configuration Control | Slot configuration for multiple eAxC_IDs with one or multiple Section Type 4 configuration commands |
| 5 | UE scheduling in-formation (ueId (UE Identifier) assign-ment to section) | Provides scheduling information for ueIds |
| 6 | Channel information | Sends UE-specific channel information from the O-DU to the O-RU |

(continued)

| Section Type | Target Scenario | Remarks |
|---|---|---|
| 7 | LAA(License Assisted Access) | Messages communicated between the O-DU and the O-RU in both directions to configure LBT (Listen-Before-Talk) for PDSCH (Physical downlink shared channel)/DRS (Discovery Reference Signal) transmission and to report the LBT outcome |
| 8 | ACK/NACK Feedback | Sent from the O-RU to the O-DU, providing ACK/NACK feedback for section descriptions in C-Plane messages |
| 9 | SINR (Signal-to-Interference-plus-Noise Ratio) Report | Reporting of post-equalization SINR values to the O-DU; applicable for DMRS-BF-EQ (DMRS based beamforming with equalization) |
| 10 | RRM (radio resource management) measurement reports | RRM measurement report sent from O-RU to O-DU. Multiple reports of different types can be sent in the same section. |
| 11 | Request RRM measurements | Sent by O-DU to request O-RU to perform one or more RRM measurements. |
| 12-255 | Reserved for future use | |

Hereinafter, the configurations of section types and the configurations of section fields for control messages according to some embodiments of the present disclosure will be described.

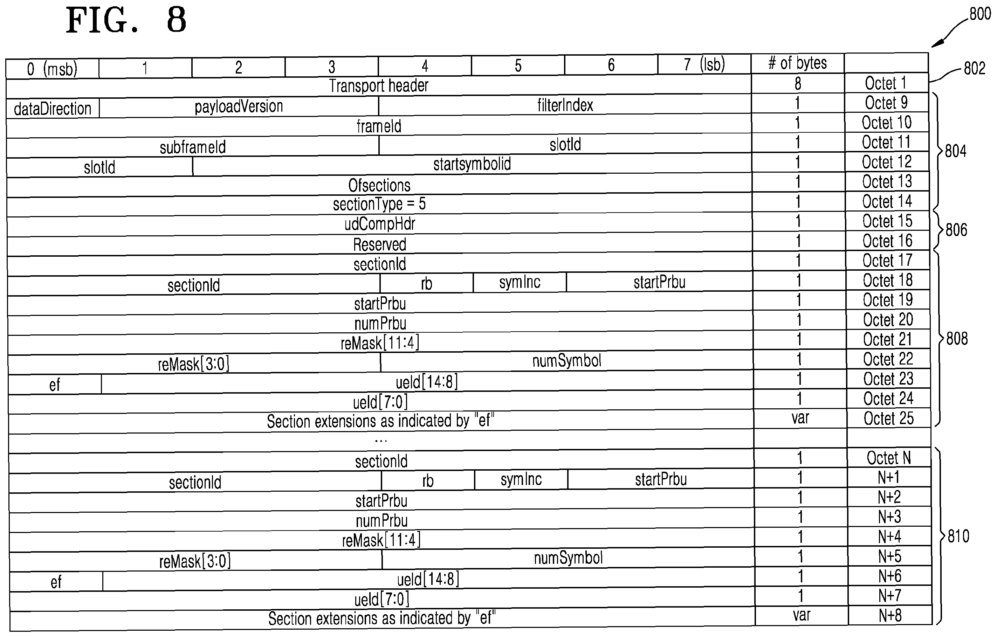

FIG. 8 illustrates a configuration of a section type according to an embodiment of the present disclosure.

Referring to FIG. 8, a C-plane message 800 may include a transport header 802, a common header 804 (or a wireless application header or a timing header), a udCompHdr field 806, and section headers 808 and 810. In an embodiment, the C-plane message 800 may be a control message of section type 5. For example, the C-plane message 800 may convey UE scheduling information.

The transport header 802 may be included in an Ethernet payload and may describe how to process application data in the control plane and/or the user plane. The transport header 802 may be 8 bytes long and may provide basic data routing capabilities including a data flow type description, a transmission and reception port identifier, the ability to support concatenation of multiple applications in a single Ethernet packet, and sequence numbering. In an embodiment, when following the O-RAN standard, the transport header 802 may be an eCPRI transport header or an IEEE 1914.3 transport header. The eCPRI header may include at least some of the following parameters.

- ecpriVersion (4 bits): 0001b (default). This parameter indicates the eCPRI protocol version.
- ecpriReserved (3 bits): 000b (default). This parameter is reserved for future use of eCPRI.
- ecpriConcatenation (1 bit): 0b (default). This parameter indicates that eCPRI concatenation is in use (allowing multiple eCPRI messages in a single Ethernet payload).
- ecpriMessage (1 byte): Message type. This parameter indicates the type of a service that the message type conveys.
- ecpriPayload (2 bytes): Payload size in bytes. This parameter is the bype size of a payload portion of the corresponding eCPRI message. This does not include padding bytes following the eCPRI message. The supported maximum payload size may be $2^{16}-1$, but the actual size may be further limited according to the underlying transport network.
- ecpriRtcid / ecpriPcid (real-time control data / IQ data transfer message series identifier) (2 bytes): This parameter is an extended antenna-carrier identifier (eAxC ID) and identifies a particular data flow associated with each C-plane (ecpriRtcid) or U-plane (ecpriPcid) message. This is similar to the "AxC" (antenna-carrier) value of CRPI and is therefore designated here as "eAxC" ("e" means "extended" to accommodate multiple bands and multiple component carriers). Multiple O-DU processors may contribute to a single eAxC.
- ecpriSeqid (2 bytes): This parameter provides unique message identification and ordering at two different levels. The first octet of the parameter is a sequence ID used to identify the message order in the eAxC message stream. The second octet of the parameter is a subsequence ID used to verify the order and implement reordering when a wireless transport level (eCPRI or IEEE-1914.3) fragmentation occurs.

Additionally or alternatively, an IEEE 1914.3 transport header may be used. The IEEE 1914.3 transport header may include at least some of the following parameters.

- RoEsubType (1 byte): This field indicates the payload type within the scope of the Radio over Ethernet Encapsulations and Mappings (RoE) subtype of the IEEE 1914.3 standard.
- RoEflowId (1 byte): This is a mechanism to identify a particular flow between the end-points. RoEflowID and 0xFF are reserved for an RoE control packet. In an embodiment, the transport header 802 may not use this field.
- RoElength (2 bytes): This field is the byte size of a payload portion of the message. The payload length field value is the total number of octets following the O-RAN common header. This does not include the Ethernet FCS or subsequent bytes.
- RoEorderInfo (4 bytes): This field includes ordering information. For example, this field may include DU_Port_ID (used to differentiate processing units (e.g., different baseband cards) in the DU), BandSector_ID (aggregated cell identifier, distinguishing bands and sectors supported by the O-RU), CC_ID (distinguishing component carriers supported by the O-RU), RU_Port_ID (used to differentiate spatial streams or beams on the O-RU), Sequence_ID (unique message sequence), E_Bit (marks the last message pertaining to the section), and/or Subsequence_ID (unique message order subsequence).

The common header 804 may include at least some of the following fields.

- dataDirection (data direction (gNB Transmit Tx/Rx): 1 bit. This parameter indicates the gNB data direction. This parameter is used in combination with eAxC_ID to identify to or from which O-RU low level endpoint the C-plane/U-plane message is targeted or originated.
- payloadVersion (payload version): 3 bits: set to value = 1 (first protocol version for payload and time reference format). This parameter defines the payload protocol version valid for the following information elements (IEs) in the application layer.
- filterIndex (filter index): 4 bits. This parameter defines an index to the channel filter to be used between IQ data and air interface, both in DL and UL.
- frameId (frame identifier): 8 bits. This parameter is a counter for 10ms frames (wrapping period 2.56 seconds), specifically frameId = frame number modulo 256.
- subframeId (subframe identifier): 4 bits. This parameter is a counter for 1ms subframes within a 10ms frame.
- slotId (slot identifier): 6 bits. This parameter is the slot number within a 1ms subframe.
- startSymbolId (start symbol identifier): 6 bits. This parameter identifies the symbol number (within a slot) of the earliest symbol, to which the information of the C-plane message 800 is applicable.
- numberOfsections (number of sections): 8 bits. This parameter indicates the number of data section descriptions (separate citations of section ID even for multiple citations of the same sectionId) included in the C-plane message 800.
- sectionType (Section Type): 8 bits: This parameter determines the characteristics of U-plane (C-plane) data to be transmitted or received from a beam with one pattern ID.

The udCompHdr field 806 may include at least some of the following fields. In an embodiment, the udCompHdr field 806 may be included in the common header 804.

- udCompHdr (user data compression header): 8 bits. The udCompHdr information is provided on the U-plane, instructing the O-RU (on DL) and O-DU (on UL) how to interpret and decompress the received U-plane data. For UL U-plane data compression, the O-DU shall instruct the O-RU via udCompHdr in a U-plane message.
- Reserved (reserved for future use): 8 bits.

In an embodiment, each of the section headers 808 and 810 may include at least some of the following fields. For example, each section header may include any combination of the following fields, and the value of each field may be different for each section header.

- sectionId (section identifier): 12 bits. When C-plane and U-plane coupling via sectionId is used, this parameter identifies individual data sections that are described by data section descriptions within the C-plane message. The purpose of the sectionId is to map U-plane data sections to the corresponding U-plane message (and Section Types) associated with the data.
- rb (resource block identifier): 1 bit. This parameter indicates whether every RB is used or every other RB is used.
- symInc (symbol number increment command): 1 bit. This parameter is used to indicate which symbol number is relevant to a given section description. The same value shall be used for each section in the message as long as symInc is 0. When symInc is 1, the maintained symbol number shall be increased to the next symbol, and the new symbol number shall be used for the section and each subsequent section until the symInc bit is again detected to be 1.

- startPrbc (starting PRB of data section description): 10 bits. This parameter conveys the first (lowest frequency) PRB described by the section description.
- numPrbc (number of contiguous PRBs per data section description): 8 bits. This parameter conveys the number of PRBs described by the section description.
- reMask (resource element mask): 12 bits. This parameter defines the resource element (RE) mask within a PRB.
- numSymbol (number of symbols): 4 bits. This parameter defines the number of PRACH symbols or the number of PRACH symbols in a PRACH occasion in the case of PRACH or the number of PRACH symbols in a NPRACH symbol group in the case of NPRACH, to which the section control is applicable.
- ef (extension flag): 1 bit. This parameter is used to indicate whether this section has any section extensions included in the message.
- ueId field: 15 bits. This parameter is used to support channel-information-based beamforming in Section Type 5.

In an embodiment, the section header 808/810 may include an "extension flag". The presence of the extension flag may indicate that a section extension is present following the header. For example, when the field "ef" of the section header 808 is "1", the section extension(s) indicated by "ef" may follow the section header 808.

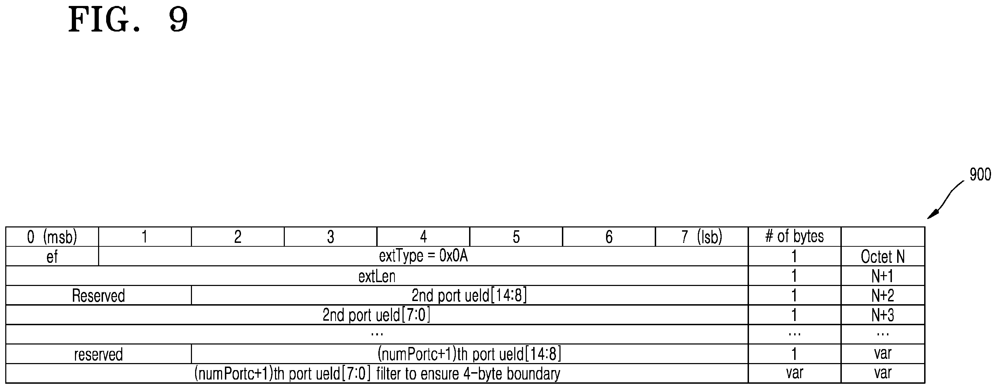

FIG. 9 illustrates a configuration of a section extension according to an embodiment of the present disclosure.

Referring to FIG. 9, a section extension field 900 may include at least some of ef, extType, extLen, or second port ueId to (numPort+1)th port ueId. In an embodiment, the section extension field 900 may correspond to section extension 10 according to the O-RAN standard. For example, the section extension field 900 may include information for grouping multiple ports or multi-UE scheduling information. In an embodiment, the section extension field 900 may be applied to C-plane messages of section types 1, 3, and 5; however, the present disclosure is not limited thereto. For example, the section extension field 900 may be included in the C-plane message 800 of FIG. 8. In an embodiment, the section extension field 900 may include beamId of each port instead of ueId of each port.

ef may indicate that there is a section extension. extType may indicate the type of the section extension of the section extension field 900. extLen may indicate the length of the section extension (e.g., the length of the section extension field 900).

In an embodiment, the section extension field 900 may further include beamGroupType and numPortc fields. beamGroupType may indicate the type of beam grouping (e.g., common beam, beam matrix indication, beam vector listing, or beamId/ueId list with associated port-list index). In an embodiment, the value of beamGroupType may be 10b; however, embodiments of the present disclosure are not limited thereto. numPortc indicates the number of eAxC ports indicated by the section extension. In an embodiment, the beamGroupType field may follow the extLen field, and the numPortc field may follow the beamGroupType.

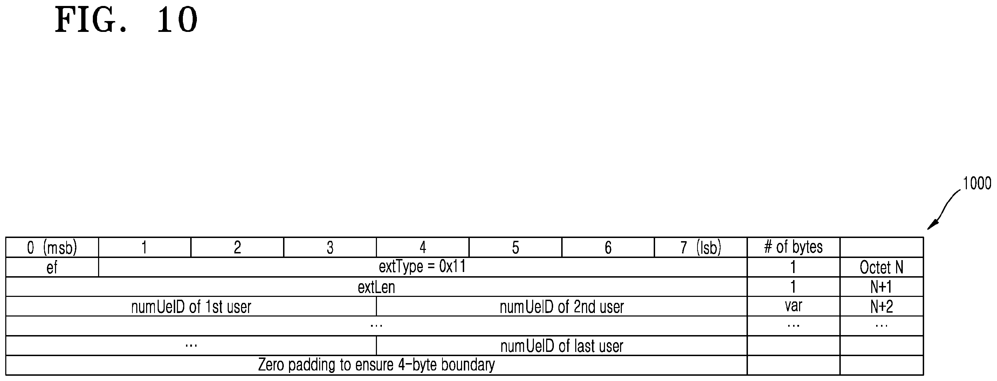

FIG. 10 illustrates a configuration of a section extension according to an embodiment of the present disclosure.

Referring to FIG. 10, a section extension field 1000 may include at least some of ef, extType, extLen, or numUeID of each user. In an embodiment, the section extension field 1000 may correspond to section extension 17 according to the O-RAN standard. For example, the section extension field 900 may include an indication or information about a user port group. The section extension field 1000 may include information about the number of ueIds of users scheduled in the preceding section types and section extension messages. The user may have multiple ueIds (i.e., may have multiple channel information, for example, when the UE supports a TAS function for SRS transmission, the O-DU may obtain various channel information corresponding to each of the transmission antennas).

ef may indicate that there is a section extension. extType may indicate the type of the section extension of the section extension field 1000 (e.g., 0x11, or 17). extLen may indicate the length of the section extension (e.g., the length of the section extension field 10000). numUeID may indicate the number of ueIds per user.

In an embodiment, the ueId of each user may be sequentially assigned by using the three reserved bits of ueId [2:0]. This may mean that the maximum number of ueIds supported per user is 8. Additionally or alternatively, the ueIds in which all three reserved bits are 0 in the previous section extension (e.g., section extension 10) may be repeatedly configured as many times as the number of layers allocated to the user. Thus, the previous section type and extension message may implicitly provide the number of scheduled users (i.e., the number of different ueIds) and the number of layers for each user (i.e., the number of identical ueIds). Lastly, the number of ueIds associated with each user may be provided in the section extension field 1000.

For example, a 15-bit ueId may include a TAS antenna identifier (or discriminator) of the corresponding user and identifiers (or discriminators) of different users. For example, three consecutive least significant bits (LSBs) of the 15-bit ueId, that is, ueId[2:0], may identify a TAS antenna of the same user. For example, ueId[2:0] may include information about any one of the antennas of the terminal of the corresponding user (e.g., the user corresponding to the preceding ueId [14:3]). ueId[14:3] may be used to distinguish different users. For example, different users may have different ueId[14:3] values.

In an embodiment, the section extension field 1000 may be applied to the section extension field 900 of FIG. 9. For example, the section extension field 1000 may be included in the C-plane message 800 of FIG. 8 together with the section extension field 900 of FIG. 9.

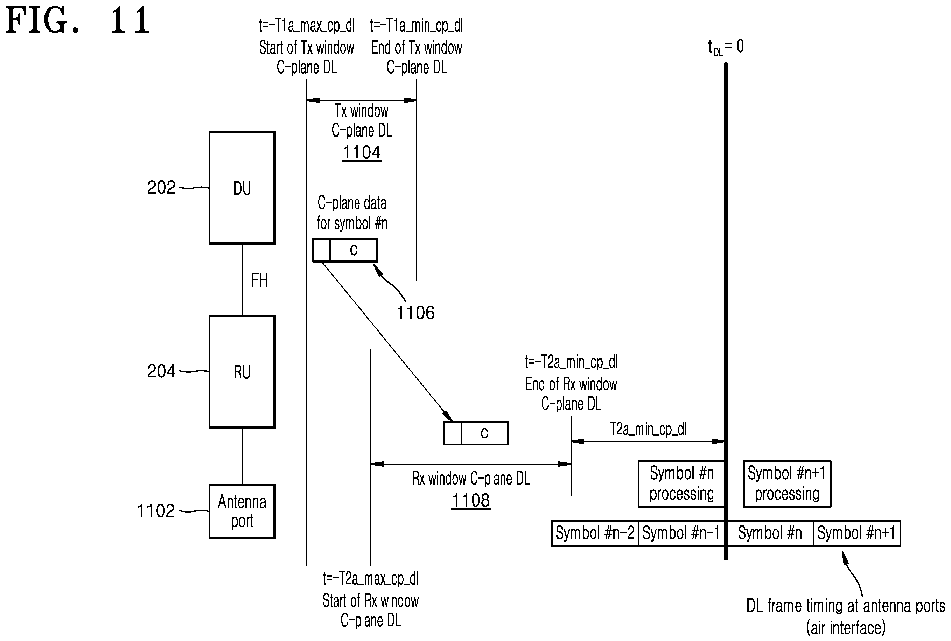

FIG. 11 illustrates a timing of downlink C-plane data transmission/reception between a DU and an RU according to an embodiment of the present disclosure.

Referring to FIG. 11, the DU 202 and the RU 204 may communicate by using a fronthaul interface FH. The RU 204 may be connected to an antenna port 1102. The antenna port 1102 may include one or more antenna arrays for the base station 200 to communicate with a user terminal. For example, the antenna port 1102 may be included in a transceiver for communication between the base station 200 and the user terminal. In an embodiment, the antenna port 1102 may be included in the MMU 408 of the RU 204.

The fronthaul interface FH may include a control plane and a user plane. The control plane may have to be used to process the corresponding U-plane packet. For example, C-plane data (or a C-plane message) 1106 for symbol #n may need to be transferred to the RU 204 prior to processing symbol #n. In the embodiment illustrated in FIG. 11, a reference point ($'t_{dl} = 0'$) may be the transmission of the earliest IQ sample (including CP) in the time domain within a symbol (e.g., symbol #n) that is generated from the IQ data received in a U-plane message specific to a symbol identified by symbolId.

For downlink, a C-plane message with instructions for transmission of a downlink radio signal, for example, a C-plane message of a data flow with dataDirection=1, may be transmitted from the DU 202 to the RU 204 and may refer to one or more symbols. The transmission and reception window for a downlink C-plane message referencing multiple symbols may be relative to the start of the earliest symbol referenced by the message. For example, the C-plane message 1106 may be transmitted from the DU 202 to the RU 204 during a C-plane downlink transmission window 1104. In an embodiment, the C-plane message 1106 may be configured in a similar way to the C-plane message 800 of FIG. 8 and may include the section extension field 900 of FIG. 9 and the section extension field 1000 of FIG. 10.

In the embodiment illustrated in FIG. 11, the C-plane downlink transmission window 1104 may correspond to (or may be included in) a time interval between t=-T1a_max_cp_dl and t=-T1a_min_cp_dl. T1a_max_cp_dl may be a parameter indicating the start of the C-plane downlink transmission window. T1a_min_cp_dl may be a parameter indicating the end of the C-plane downlink transmission window. The C-plane message 1106 may be received by the RU 204 during a C-plane downlink reception window 1108. In the embodiment illustrated in FIG. 11, the C-plane downlink reception window 1108 may correspond to (or may be included in) a time interval between t=-T2a_max_cp_dl and t=-T2a_min_cp_dl. T2a_max_cp_dl may be a parameter indicating the start of the C-plane downlink reception window. T2a_min_cp_dl may be a parameter indicating the end of the C-plane downlink reception window.

Based on the received C-plane message 1106, the RU 204 may process information included in a symbol corresponding to the C-plane message 1106. The RU 204 may need to process data (e.g., IQ sample) for symbol #n during a predefined period T2a_min_cp_dl. T2a_min_cp_dl may be a parameter indicating a minimum RU data processing delay between receiving a downlink real-time C-plane message through the fronthaul interface and transmitting the corresponding first IQ sample from the antenna. At a reference point, the RU 204 may transmit a frame corresponding to symbol #n by using the antenna port 1102.

As described above, in order to transmit a frame corresponding to symbol #n at the reference point by using the antenna port 1102, a C-plane message of a section type to be transmitted for each symbol should be transferred to the RU 204 before the corresponding symbol is processed, and the RU 204 may have to process data for the corresponding symbol during the interval T2a_min_cp_dl. The data processing for symbol #n may include channel information-based beamforming. For example, during the interval T2a_min_cp_dl, based on the information included in the C-plane message 1106 (e.g., numUeID of each user and/or ueId of each port) and the channel information, the RU 204 may have to complete the SVD processing and SVD-based beamforming described above with reference to FIGS. 5 to 7. The parameter T2a_min_cp_dl may be hundreds of µs (e.g., 250 µs). Thus, despite the complexity of an SVD operation, SVD-based beamforming should take a short time, thus increasing the complexity of the hardware for SVD processing.

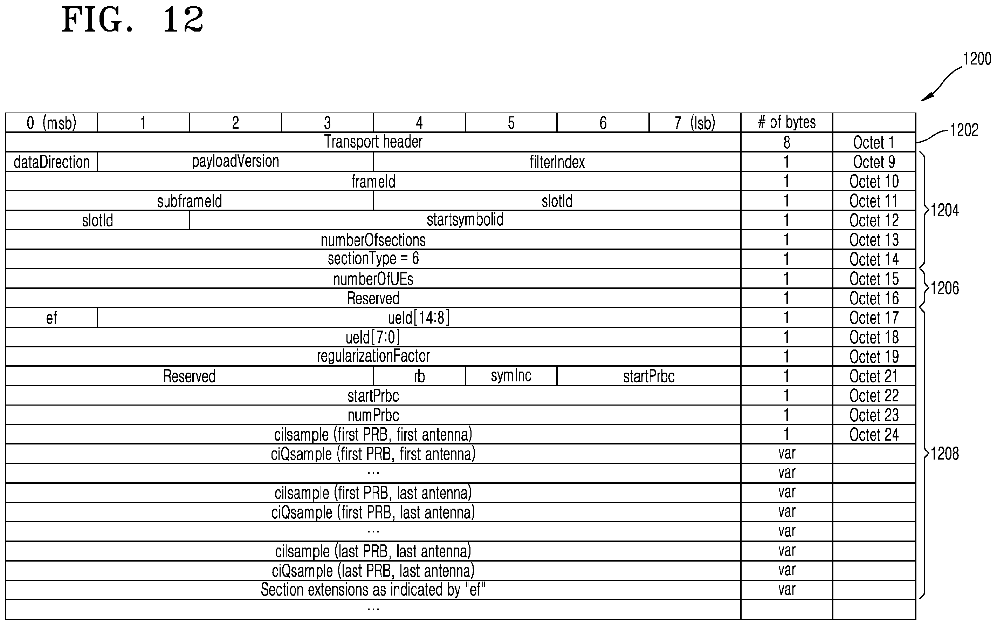

FIG. 12 illustrates a configuration of a section type according to an embodiment of the present disclosure.

Referring to FIG. 12, a C-plane message 1200 may include a transport header 1202, a common header 1204 (or a wireless application header or a timing header), a numberOfUEs field 1206, and a section header 1208. In an embodiment, the C-plane message 1200 may be a control message of section type 6 of the O-RAN standard. For example, the C-plane message 1200 may convey channel information (e.g., channel information per ueId).

The transport header 1202 may be configured in a similar way to the transport header 802 of FIG. 8. The common header 1204 may include dataDirection, payloadVersion, filterIndex, frameId, subframeId, slotID, startSymbolId, numberOfsections, and sectionType. Description of the parameters common to the common header 804 of FIG. 8 among the fields of the common header 1204 will be omitted.

The numberOfUEs field 1206 (8 bits) may indicate the number of UE-specific channel information data sets. The numberOfUEs field 1206 may indicate the number of UEs (for which channel information is provided) included in the C-plane message 1200. The numberOfUEs field 1206 may further include 8-bit reserved fields.

In an embodiment, a ciCompHdr (channel information compression header) field may be added following the numberOfUEs field 1204. The ciCompHdr field (8 bits) may correspond to a channel information compression header. The ciCompHdr field may define a compression method and an IQ bit width for the channel information. For example, the ciCompHdr field may include subfields ciIqWidth, ciCompMeth, and ciCompOpt. ciIqWidth may indicate the bit width of each I and each Q. ciCompMeth may indicate the compression method (e.g., no compression, block floating point, block scaling, or μ-law method). ciCompOpt may indicate the compression option (e.g., compression per UE or compression per PRB).

The section header 1208 may include at least some of the following fields. The description of fields (parameters) common to the section headers 808 and 810 of FIG. 8 among the following fields will be omitted.

- ef (extension flag): 1 bit.
- ueId field: 15 bits. This parameter supports channel-information-based beamforming (CIBF) by providing a logical identifier for the channel information set associated with a spatial stream of the UE transported through the C-plane message 1200.
- regularizationFactor (regularization factor used for minimum mean square error (MMSE) reception): 16 bits. This parameter provides a signed value to support an MMSE operation within the O-RU when beamforming weights are supported in the O-RU.
- reserved (reserved for the future): 4 bits.
- rb (resource block identifier): 1 bit. For example, this is set to value = 0.
- symInc (symbol number increment command): 1 bit.
- startPrbc (starting PRB of data section description): 10 bits.
- numPrbc (number of contiguous PRBs per data section description): 8 bits.
- ciIsample (channel information value, in-phase sample): 1-16 bits.
- ciQsample (channel information value, quadrature sample): 1-16 bits. The ciIsample and ciQsample values are the channel information complex values relayed from the DU 202 to the RU 204. In the illustrated embodiment, values for the first Prbc from the first antenna to the last antenna may be transmitted, and then, values for the second Prbc from the first antenna to the last antenna may be transmitted, and so on until values for the last Prbc (PRB collection) from the first antenna to the last antenna are transmitted. However, the present disclosure is not limited to the illustrated embodiment. For example, these values may be transmitted for each PRB group (e.g., from the first antenna to the last antenna for the first PRB group, and then, from the first antenna to the last antenna for the second PRB group). Each PRB group for one antenna includes a ciIsample. ciQsample pair. Padding (set to 0) bits may be inserted after the last Q value (e.g., the last ciQsample value).

In an embodiment, the section header 1208 may further include ciCompParam. ciCompParam may be a channel information compression parameter and may be 0 or 8 bits. This parameter is applied to a compression method specified by the associated ciCompMeth value. When ciCompOpt (a sub-field of ciCompHdr) is 0, this parameter is applied to the next vector of ciIsample, ciQsample for all PRBs of a particular UE. When ciCompOpt (a sub-field of ciCompHdr) is 1, this parameter is applied to the next vector of ciIsample, ciQsample for all antennas of a particular PRB. In an embodiment, the section header 1208 may further include ciCompParam for the first PRB of the corresponding UE or for all PRBs. ciCompParam may be inserted between numPrbc and the first ciIsample value.

In an embodiment, the C-plane message 1200 may further include one or more repeated section headers of a similar configuration to the section header 1208. For example, the C-plane message 1200 may include a plurality of section headers indicating channel information of a plurality of UEs (or a plurality of ueIds). Each section header may include the ueId of the corresponding UE (or the corresponding ueId) and the channel information values (e.g., a pair (pairs) of ciIsample and ciQsample).

The configuration of the C-plane message 1200 illustrated in FIG. 12 is just an example, and the configuration of the C-plane message 1200 is not limited to the configuration illustrated in FIG. 12. In an embodiment, some configurations of the C-plane message 1200 of FIG. 12 may be added, deleted, or modified.

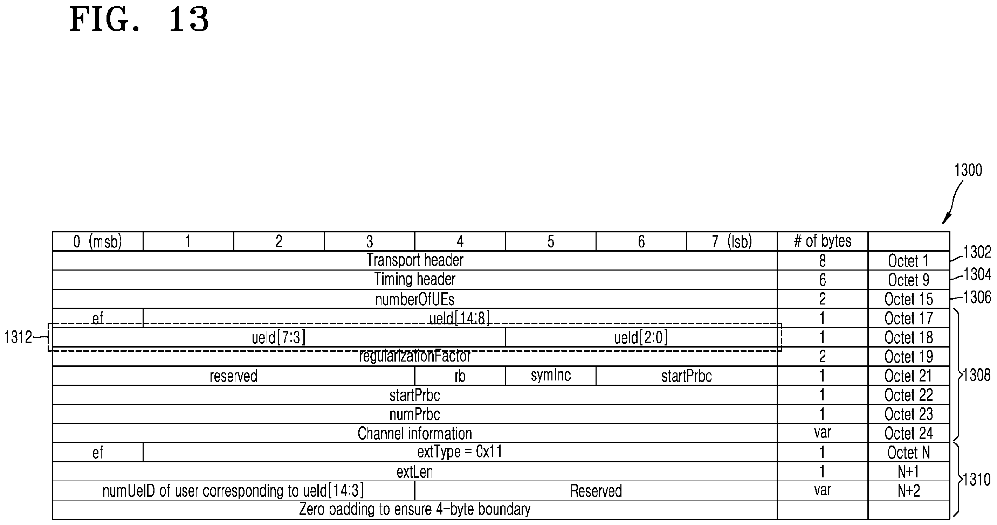

FIG. 13 illustrates a configuration of a section type including a section extension according to an embodiment of the present disclosure.

Referring to FIG. 13, a C-plane message 1300 may include a transport header 1302, a timing header 1304, a numberOfUEs field 1306, a section header 1308, and a section extension field 1310. In an embodiment, the C-plane message 1300 may be a control message of section type 6 of the O-RAN standard, and the section extension field 1310 may be a section extension field of section extension 17 of the O-RAN standard. In other words, the C-plane message of section type 6 may include section extension 17. For example, the C-plane message 1300 may include information about the number of ueIds of users together with channel information (e.g., channel information per ueId). Accordingly, based on the C-plane message 1300, the RU 204 may identify that the UE 502 supports TAS and may identify the number of antennas used for TAS.

In an embodiment, the RU 204 may report its capability of supporting section extension 17 in section type 6 to the DU 202 through an M-plane message. Based on the M-plane message from the RU 204, the DU 202 may identify that the RU 204 supports the C-plane message 1300. The DU 202 may identify whether channel information is in the DU 202. Based on identifying that the RU 204 supports the C-plane message 1300 and identifying that channel information is in the DU 202, the DU 202 may generate a C-plane message 1300 including a section header 1308 including ueId and a section extension field 1310 including numUeID.

The transport header 1302 may be configured in a similar way to the transport header 1202 of FIG. 12. The timing header 1304 may be configured in a similar way to the common header 1204 of FIG. 12. The numberOfUEs field 1306 may be configured in a similar way to the numberOfUEs field 1206 of FIG. 12. The section header 1308 may be configured in a similar way to the section header 1208 of LFIG. 12. For example, the section header 1308 may include at least some of the fields (parameters) included in the section header 1208. The 'channel information' included in the section header 1308 may include channel information corresponding to ueId[14:0] of the section header 1308. Descriptions of the common fields (or parameters) between the C-plane message 1300 and the C-plane message 1200 will be omitted.

In FIG. 13, the section header 1308 may include a ueId field 1312. As described above with reference to FIG. 10, three consecutive least significant bits (LSBs) of the 15-bit ueId, that is, ueId[2:0], may identify a TAS antenna of the same user. The other bits, that is, ueId[14:3], may be used to distinguish different users. For example, ueId[2:0] of the ueId field 1312 may indicate any one of the antennas of the user. ueId[14:3] may indicate the user associated with the section header 1308.

The C-plane message 1300 of FIG. 13 may include a section extension field 1310. The section extension field 1310 may be configured in a similar way to the section extension field 1000 of FIG. 10. For example, the section extension field 1310 may include an ef field indicating that there is a section extension, an extType field indicating that the section extension type is 17, an extLen field indicating the length of the section extension field 1310, and a field indicating the numUeID of a scheduled user, that is, a user corresponding to ueId[14:3], in the section header 1308 preceding the section extension field 1310.

As described above with reference to FIGS. 5 and 6, in order to transmit a signal to the UE 502, the RU 204 of the base station 200 may perform SVD beamforming by using channel information associated with each antenna of the UE 502. For example, the RU 204 may perform SVD processing (operation) based on at least some of the ueId of section type 6, the channel information of section type 6, and the numUeID of section extension 17. In response to receiving the C-plane message 1300, the RU 204 may start SVD processing based on the C-plane message 1300. For example, the RU 204 may identify the number of channel information for each user based on numUeID and identify antenna-by-antenna channel information for the corresponding user based on ueId. The RU 204 may perform SVD processing based on the antenna-by-antenna channel information.

The C-plane message of section type 6 (e.g., the C-plane message 1200 or the C-plane message 1300) may be a non-delay managed C-plane message. For example, the DU 202 may transmit a C-plane message of section type 6 including per-UE channel information to the RU 204 at a period equal to or longer than a slot. The transmission/reception window constraints may not be applied to the C-plane message of section type 6. For example, the C-plane message of section type 6 may be transmitted/received regardless of a transmission/reception window for the control plane (e.g., the windows 1104 and 1108 of FIG. 11). The C-plane message of section type 6 may not be transmitted on a symbol-by-symbol or slot-by-slot basis. For example, the C-plane message of section type 6 may be transmitted at a period equal to or longer than a slot. Thus, the processing delay allowed for the RU 204 to perform beamforming based on the information included in the C-plane message of section type 6 with section extension 17 may be several ms. This may be in contrast to the processing delay for beamforming based on the C-plane message of section type 5 with section extension 17 being several hundred μs as described above with reference to FIG. 11. As a result, the RU 204 may secure a longer time for SVD processing, and thus, the complexity of hardware implementation for SVD processing in the RU 204 may be reduced.

In an embodiment, the section extension field 1310 may be added for all ueId[2:0]. For example, in the C-plane message of section type 6, each section header may include section extension 17 regardless of ueId[2:0] in the section header. Thus, for each user, the C-plane message of section type 6 may include as many section extension 17 fields as the number of ueIds of each user. Tables 2 to 4 below illustrate the ueId values of the section header and the numUeID values of the section extension 17 field in the section type 6 C-plane messages for user 0, user 1, and user 2, respectively. The ueId described in Tables 2 to 4 may indicate the value of ueID[4:0] of each user.

[Table 2]

| user 0 | ueId of section type 6 C-plane message | numUeID of section extension 17 field |
|---|---|---|
| ueId=01000b | ueId=01000b | numUeID=8 |
| ueId=01001b | ueId=01001b | numUeID=8 |
| ueId=01010b | ueId=01010b | numUeID=8 |
| ueId=01011b | ueId=01011b | numUeID=8 |

(continued)

| user 0 | ueId of section type 6 C-plane message | numUeID of section extension 17 field |
|---|---|---|
| ueId=01100b | ueId=01100b | numUeID=8 |
| ueId=01101b | ueId=01101b | numUeID=8 |
| ueId=01110b | ueId=01110b | numUeID=8 |
| ueId=01111b | ueId=01111b | numUeID=8 |

Referring to Table 2, ueId[2:0] of user 0 may be any one of values 000 to 111. Each of the eight ueId[2:0] values may correspond to any one of the antennas of user 0, and thus, the antennas of user 0 may be identified based on ueId[2:0] of user 0. Because the ueIDs in Table 2 are for user 0, the values of ueId[4:3] may be equal to each other. In Table 2, regardless of the values of ueId[2:0], section extension 17 may follow the section header for each ueId. Because user 0 has eight ueIds, section extension 17 for each section header may include numUeID with a value of 8.

[Table 3]

| user 1 | ueId of section type 6 C-plane message | numUeID of section extension 17 field |
|---|---|---|
| ueId=10000b | ueId=10000b | numUeID=4 |
| ueId=10001b | ueId= 10001b | numUeID=4 |
| ueId=10010b | ueId=10010b | numUeID=4 |
| ueId=10011b | ueId=10011b | numUeID=4 |

Referring to Table 3, ueId[2:0] of user 1 may be any one of values 000 to 011. Each of the four ueId[2:0] values may correspond to any one of the antennas of user 1, and thus, the antennas of user 1 may be identified based on ueId[2:0] of user 1. Because the ueIDs in Table 3 are for user 1, the values of ueId[4:3] may be equal to each other. In Table 3, regardless of the values of ueId[2:0], section extension 17 may follow the section header for each ueId. Because user 1 has four ueIds, section extension 17 for each section header may include numUeID with a value of 4.

[Table 4]

| user 2 | ueId of section type 6 C-plane message | numUeID of section extension 17 field |
|---|---|---|
| ueId=11000b | ueId=11000b | numUeID=2 |
| ueId=11001b | ueId=11001b | numUeID=2 |

Referring to Table 4, ueId[2:0] of user 2 may be 000 or 001. Each of the two ueId[2:0] values may correspond to any one of the antennas of user 2, and thus, the antennas of user 2 may be identified based on ueId[2:0] of user 2. Because the ueIDs in Table 4 are for user 2, the values of ueId[4:3] may be equal to each other. In Table 4, regardless of the values of ueId[2:0], section extension 17 may follow the section header for each ueId. Because user 2 has two ueIds, section extension 17 for each section header may include numUeID with a value of 2.

In an embodiment, the section extension field 1310 may be added only for one or more particular ueId[2:0]. Based on the ueId[2:0] value included in the section header of each section type 6, section extension 17 may be added only for some section headers of section types 6. For example, in the C-plane message of section type 6, section extension 17 may be added only for a section header (section headers) whose ueId[2:0] value is one or more particular values. For example, section extension 17 may be added only for a section header with ueId[2:0]=0. Accordingly, when a section type 6 command is invoked more than once to convey channel information for the user (e.g., more than one channel information), the number of ueIds may be provided once only in a case where ueId[2:0] is 0 and the DU 202 may append section extension 17 together with the first section description in the section type 6 command for the user. Tables 5 to 7 below illustrate the ueId values of the section header and the numUeID values of the section extension 17 field in the section type 6 C-plane messages for user 0, user 1, and user 2, respectively. The ueId described in Tables 5 to 7 may indicate the value of ueID[4:0] of each user.

[Table 5]

| user 0 | ueId of section type 6 C-plane message | numUeID of section extension 17 field |
|---|---|---|
| ueId=01000b | ueId=01000b | numUeID=8 |
| ueId=01001b | ueId=01001b | - |
| ueId=01010b | ueId=01010b | - |
| ueId=01011b | ueId=01011b | - |
| ueId=01100b | ueId=01100b | - |
| ueId=01101b | ueId=01101b | - |
| ueId=01110b | ueId=01110b | - |
| ueId=01111b | ueId=01111b | - |

Referring to Table 5, ueId[2:0] of user 0 may be any one of values 000 to 111. In contrast to Table 2, in Table 5, section extension 17 may follow only the section header of section type 6 including ueId[2:0]=0 (i.e., ueId=01000b). Section extension 17 may not be added for the other section headers of section type 6 associated with user 0.

[Table 6]

| user 1 | ueId of section type 6 C-plane message | numUeID of section extension 17 field |
|---|---|---|
| ueId=10000b | ueId=10000b | numUeID=4 |
| ueId=10001b | ueId=10001b | - |
| ueId=10010b | ueId=10010b | - |
| ueId=10011b | ueId=10011b | - |

Referring to Table 6, ueId[2:0] of user 1 may be any one of values 000 to 011. In contrast to Table 3, in Table 6, section extension 17 may follow only the section header of section type 6 including ueId[2:0]=0 (i.e., ueId=10000b). Section extension 17 may not be added for the other section headers of section type 6 associated with user 1.

[Table 7]

| user 2 | ueId of section type 6 C-plane message | numUeID of section extension 17 field |
|---|---|---|
| ueId=11000b | ueId=11000b | numUeID=2 |
| ueId=11001b | ueId=11001b | - |

Referring to Table 7, ueId[2:0] of user 2 may be any one of values 000 to 001. In contrast to Table 4, in Table 7, section extension 17 may follow only the section header of section type 6 including ueId[2:0]=0 (i.e., ueId=01000b). Section extension 17 may not be added for the other section headers of section type 6 associated with user 2.

Additionally or alternatively, section extension 17 may be added only for a section header (section headers) where the value of ueId[2:0] is an even number, a section header (section headers) where the value of ueId[2:0] is an odd number, a section header (section headers) where the value of ueId[2:0] is a multiple of a particular natural number, a section header (section headers) where the value of ueId[2:0] is a prime number, and/or a value equal to numUeID divided by 2 (or rounded off/rounded up below the decimal point/truncated below the decimal point). However, embodiments of the present disclosure are not limited thereto.

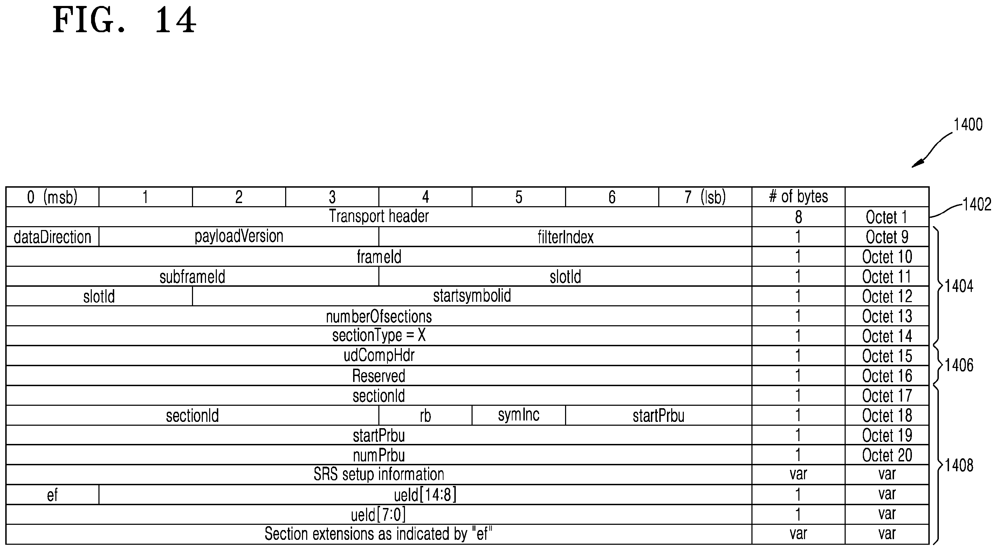

FIG. 14 illustrates a configuration of a section type according to an embodiment of the present disclosure.

Referring to FIG. 14, a C-plane message 1400 may include a transport header 1402, a common header 1404 (or a wireless application header or a timing header), a udCompHdr field 1406, and a section header 1408. In the illustrated embodiment, the section type of the C-plane message 1400 may be 'X' (where 'X' is a natural number). Hereinafter, the C-plane message 1400 may be referred to as a 'C-plane message of section type X' or a 'section type X C-plane message'. The section header 1408 may be referred to as a 'section header of section type X' or a 'section type X section header'.

In an embodiment, the C-plane message 1400 may be a ueId-by-ueId C-plane message that indicates a channel estimation operation to the RU 204. For example, the C-plane message 1400 may include information for directly or indirectly commanding (or instructing or requesting) to perform channel estimation. In some embodiments, a channel estimation function may be allocated to the RU 204 rather than the DU 202, and accordingly, the DU 202 may command the RU 204 to perform channel estimation through the C-plane message 1400. In response to the C-plane message 1400, the MMU 408 of the RU 204 may perform channel estimation and perform SVD beamforming based on the obtained channel information. In an embodiment, the C-plane message 1400 may be transmitted from the DU 202 to the RU 204 according to the SRS period.

The transport header 1402 may be configured in a similar way to the transport header 802 of FIG. 8. The common header 1404 may be configured in a similar way to the common header 804 of FIG. 8. Description of the parameters common to the common header 804 of FIG. 8 among the fields of the common header 1404 will be omitted. The udCompHdr field 1406 may be configured in a similar way to the udCompHdr field 806 of FIG. 8. Descriptions of the parameters common to the udCompHdr field 806 of FIG. 8 among the udCompHdr field 1406 will be omitted.

The section header 1408 may include at least some of the following fields. Descriptions of the fields (parameters) common to the section headers 808 and 810 of FIG. 8 or the fields (parameters) common to the section header 1208 of FIG. 12 among the following fields will be omitted.

- sectionId (section identifier): 12 bits.
- rb (resource block identifier): 1 bit.
- symInc (symbol number increment command): 1 bit.
- startPrbc (starting PRB of data section description): 10 bits.
- numPrbc (number of contiguous PRBs per data section description): 8 bits.
- SRS setup information: 8 bits. The SRS setup (configurationsetup) information may include information necessary to support SRS-based channel estimation, such as SRS resource configuration (e.g., SRS transmission period, time slot position, or frequency resource), SRS transmission power and beamforming information, antenna configuration information of the UE, or coding and compression configuration of the SRS signal.
- ef (extension flag): 1 bit.
- ueId field: 15 bits.

The configuration of the C-plane message 1400 illustrated in FIG. 14 is just an example, and the configuration of the C-plane message 1400 is not limited to the configuration illustrated in FIG. 14. In an embodiment, some configurations of the C-plane message 1400 of FIG. 14 may be added, deleted, or modified.

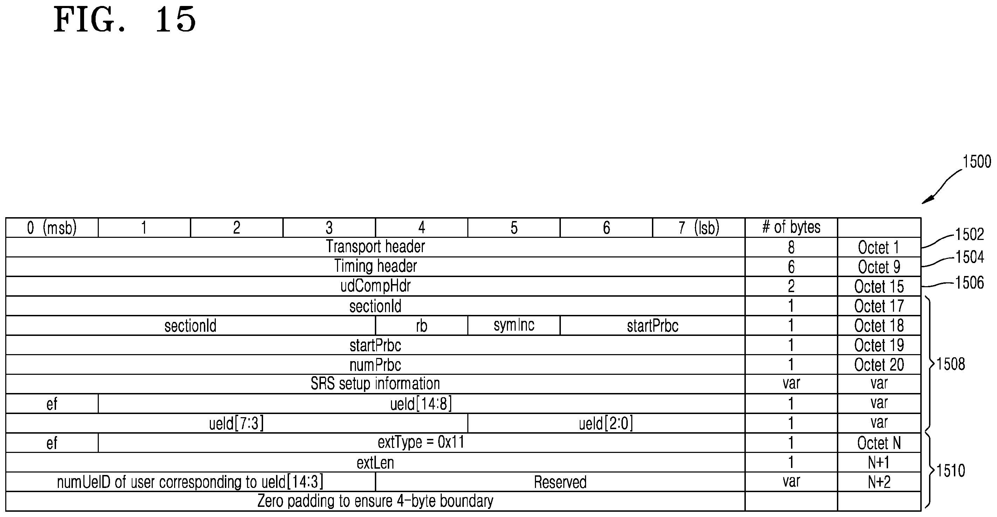

FIG. 15 illustrates a configuration of a section type including a section extension according to an embodiment of the present disclosure.

Referring to FIG. 15, a C-plane message 1500 may include a transport header 1502, a timing header 1504, a udCompHdr field 1506, a section header 1508, and a section extension field 1510. In an embodiment, the C-plane message 1500 may correspond to a message in which the section extension field 1510 is added to the C-plane message 1400 of FIG. 14. The section extension field 1510 may be a section extension field of section extension 17 of the O-RAN standard. For example, the C-plane message 1500 may include information about the number of ueIds of users together with a command for SRS-based channel estimation. Accordingly, based on the C-plane message 1500, the RU 204 may identify that the UE 502 supports TAS and may identify the number of antennas used for TAS.

In an embodiment, the RU 204 may report its capability of supporting section extension 17 in section type X to the DU 202 through an M-plane message. Based on the M-plane message from the RU 204, the DU 202 may identify that the RU 204 supports the C-plane message 1500. The DU 202 may identify whether channel information is in the DU 202. Based on identifying that the RU 204 supports the C-plane message 1500 and identifying that channel information is not in the DU 202, the DU 202 may generate a C-plane message 1500 including a section header 1508 including ueId and a section extension field 1510 including numUeID.

The transport header 1502 may be configured in a similar way to the transport header 1402 of FIG. 14. The timing header 1504 may be configured in a similar way to the common header 1404 of FIG. 14. The udCompHdr field 1506 may be configured in a similar way to the udCompHdr field 1406 of FIG. 14. The section header 1508 may be configured in a similar way to the section header 1408 of LFIG. 14. For example, the section header 1508 may include at least some of the fields (parameters) included in the section header 1408. The 'SRS setup information' included in the section header 1508 may include SRS setup information corresponding to ueId[14:0] of the section header 1508. Descriptions of the common fields (or parameters) between the C-plane message 1500 and the C-plane message 1400 will be omitted.

In FIG. 15, the section header 1508 may include a ueId field. As described above with reference to FIGS. 10 and 13, three consecutive least significant bits (LSBs) of the 15-bit ueId, that is, ueId[2:0], may identify a TAS antenna of the same user. The other bits, that is, ueId[14:3], may be used to distinguish different users. For example, ueId[2:0] of the ueId field may indicate any one of the antennas of the user. ueId[14:3] may indicate the user associated with the section header 1508.

The C-plane message 1500 of FIG. 15 may include a section extension field 1510. The section extension field 1510 may be configured in a similar way to the section extension field 1000 of FIG. 10 or the section extension field 1310 of FIG. 13. The section extension field 1510 may correspond to section extension 17. For example, the section extension field 1510 may include an ef field indicating that there is a section extension, an extType field indicating that the section extension type is 17, an extLen field indicating the length of the section extension field 1510, and a field indicating the numUeID of a scheduled user, that is, a user corresponding to ueId[14:3], in the section header 1508 preceding the section extension field 1510.

As described above with reference to FIGS. 5 and 6 , in order to transmit a signal to the UE 502, the RU 204 of the base station 200 may perform SVD beamforming by using channel information associated with each antenna of the UE 502. In response to receiving the C-plane message 1500, the RU 204 may start SVD processing based on the C-plane message 1500. For example, the RU 204 may identify the number of channel information for each user based on the numUeID of the section extension field 1510, identify antenna-by-antenna channel information of the corresponding user based on the ueId of the section header 1508, and perform SRS-based channel estimation for each antenna of the UE 502 based on the SRS setup information of the section header 1508. Thereafter, the RU 204 may perform SVD processing based on the antenna-by-antenna channel information. In an embodiment, at least some of the SRS-based channel estimation or SVD processing may be performed by the MMU 408 of the RU 204.

The C-plane message of section type X (e.g., the C-plane message 1400 or the C-plane message 1500) may be transmitted to the RU 204 at a period equal to or longer than a slot. For example, the C-plane message of section type X may be transmitted to the RU 204 according to the SRS period. The transmission period of the C-plane message of section type X may be aligned with the SRS period. The C-plane message of section type X may be transmitted/received regardless of a transmission/reception window for the control plane (e.g., the windows 1104 and 1108 of FIG. 11). Thus, the C-plane message of section type X with section extension 17 may be transmitted to the RU 204 at a period (or interval) of several ms. Thus, the processing delay allowed for the RU 204 to perform beamforming based on the information included in the C-plane message of section type X with section extension 17 may be several ms. This may be in contrast to the processing delay for beamforming based on the C-plane message of section type 5 with section extension 17 being several hundred μs as described above with reference to FIG. 11. As a result, the RU 204 may secure a longer time for SVD processing, and thus, the complexity of hardware implementation for SVD processing in the RU 204 may be reduced.

In an embodiment, as described above with reference to Tables 2 to 4, the section extension field 1510 may be added for all ueId[2:0]. For example, in the C-plane message of section type X, each section header may include section extension 17 regardless of ueId[2:0] in the section header. Thus, for each user, the C-plane message of section type X may include as many section extension 17 fields as the number of ueIds of each user. Tables 8 to 10 below illustrate the ueId values of the section header and the numUeID values of the section extension 17 field in the section type X C-plane messages for user 0, user 1, and user 2, respectively. The ueId described in Tables 8 to 10 may indicate the value of ueID[4:0] of each user.

[Table 8]

| user 0 | ueId of section type X C-plane message | numUeID of section extension 17 field |
|---|---|---|
| ueId=01000b | ueId=01000b | numUeID=8 |
| ueId=01001b | ueId=01001b | numUeID=8 |
| ueId=01010b | ueId=01010b | numUeID=8 |
| ueId=01011b | ueId=01011b | numUeID=8 |
| ueId=01100b | ueId=01100b | numUeID=8 |
| ueId=01101b | ueId=01101b | numUeID=8 |
| ueId=01110b | ueId=01110b | numUeID=8 |
| ueId=01111b | ueId=01111b | numUeID=8 |

Referring to Table 8, ueId[2:0] of user 0 may be any one of values 000 to 111. Each of the eight ueId[2:0] values may correspond to any one of the antennas of user 0, and thus, the antennas of user 0 may be identified based on ueId[2:0] of user 0. Because the ueIDs in Table 8 are for user 0, the values of ueId[4:3] may be equal to each other. In Table 8, regardless of the values of ueId[2:0], section extension 17 may follow the section header for each ueId. Because user 0 has eight ueIds, section extension 17 for each section header may include numUeID with a value of 8.

[Table 9]

| user 1 | ueId of section type X C-plane message | numUeID of section extension 17 field |
|---|---|---|
| ueId=10000b | ueId=10000b | numUeID=4 |

(continued)

| user 1 | ueId of section type X C-plane message | numUeID of section extension 17 field |
|---|---|---|
| ueId=10001b | ueId=10001b | numUeID=4 |
| ueId=10010b | ueId=10010b | numUeID=4 |
| ueId=10011b | ueId=10011b | numUeID=4 |

Referring to Table 9, ueId[2:0] of user 1 may be any one of values 000 to 011. Each of the four ueId[2:0] values may correspond to any one of the antennas of user 1, and thus, the antennas of user 1 may be identified based on ueId[2:0] of user 1. Because the ueIDs in Table 9 are for user 1, the values of ueId[4:3] may be equal to each other. In Table 9, regardless of the values of ueId[2:0], section extension 17 may follow the section header for each ueId. Because user 1 has four ueIds, section extension 17 for each section header may include numUeID with a value of 4.

[Table 10]

| user 2 | ueId of section type X C-plane message | numUeID of section extension 17 field |
|---|---|---|
| ueId=11000b | ueId=11000b | numUeID=2 |
| ueId=11001b | ueId=11001b | numUeID=2 |

Referring to Table 10, ueId[2:0] of user 2 may be 000 or 001. Each of the two ueId[2:0] values may correspond to any one of the antennas of user 2, and thus, the antennas of user 2 may be identified based on ueId[2:0] of user 2. Because the ueIDs in Table 10 are for user 2, the values of ueId[4:3] may be equal to each other. In Table 10, regardless of the values of ueId[2:0], section extension 17 may follow the section header for each ueId. Because user 2 has two ueIds, section extension 17 for each section header may include numUeID with a value of 2.

In an embodiment, the section extension field 1510 may be added only for one or more particular ueId[2:0]. Based on the ueId[2:0] value included in the section header of each section type X C-plane message, section extension 17 may be added only for some section headers of section types X. For example, in the C-plane message of section type X, section extension 17 may be added only for a section header (section headers) whose ueId[2:0] value is one or more particular values. For example, section extension 17 may be added only for a section header with ueId[2:0]=0. Additionally or alternatively, section extension 17 may be added only for a section header (section headers) where the value of ueId[2:0] is an even number, a section header (section headers) where the value of ueId[2:0] is an odd number, a section header (section headers) where the value of ueId[2:0] is a multiple of a particular natural number, a section header (section headers) where the value of ueId[2:0] is a prime number, and/or a value equal to numUeID divided by 2 (or rounded off/rounded up below the decimal point/truncated below the decimal point). However, embodiments of the present disclosure are not limited thereto. Tables 11 to 13 below illustrate the ueId values of the section header and the numUeID values of the section extension 17 field in the section type X C-plane messages for user 0, user 1, and user 2, respectively. The ueId described in Tables 11 to 13 may indicate the value of ueID[4:0] of each user.

[Table 11]

| user 0 | ueId of section type X C-plane message | numUeID of section extension 17 field |
|---|---|---|
| ueId=01000b | ueId=01000b | numUeID=8 |
| ueId=01001b | ueId=01001b | - |
| ueId=01010b | ueId=01010b | - |
| ueId=01011b | ueId=01011b | - |
| ueId=01100b | ueId=01100b | - |
| ueId=01101b | ueId=01101b | - |
| ueId=01110b | ueId=01110b | - |
| ueId=01111b | ueId=01111b | - |

Referring to Table 11, ueId[2:0] of user 0 may be any one of values 000 to 111. In contrast to Table 8, in Table 11, section extension 17 may follow only the section header of section type X including ueId[2:0]=0 (i.e., ueId=01000b).

Section extension 17 may not be added for the other section headers of section type X associated with user 0.

[Table 12]

| user 1 | ueId of section type X C-plane message | numUeID of section extension 17 field |
|---|---|---|
| ueId=10000b | ueId=10000b | numUeID=4 |
| ueId=10001b | ueId=10001b | - |
| ueId=10010b | ueId=10010b | - |
| ueId=10011b | ueId=10011b | - |

Referring to Table 12, ueId[2:0] of user 1 may be any one of values 000 to 011. In contrast to Table 9, in Table 12, section extension 17 may follow only the section header of section type X including ueId[2:0]=0 (i.e., ueId=10000b). Section extension 17 may not be added for the other section headers of section type X associated with user 1.

[Table 13]

| user 2 | ueId of section type X C-plane message | numUeID of section extension 17 field |
|---|---|---|
| ueId=11000b | ueId=11000b | numUeID-2 |
| ueId=11001b | ueId=11001b | - |

Referring to Table 13, ueId[2:0] of user 2 may be any one of values 000 to 001. In contrast to Table 10, in Table 13, section extension 17 may follow only the section header of section type X including ueId[2:0]=0 (i.e., ueId=01000b). Section extension 17 may not be added for the other section headers of section type X associated with user 2.

An embodiment in which section extension 17 is added to the C-plane message of section type 6 or section type X has been described with reference to FIGS. 13 and 15; however, embodiments of the present disclosure are not limited thereto. In an embodiment, section extension 17 may be added to a C-plane message including a field indicating ueId among not only section type 6 or section type X but also non-delay-managed C-plane messages (e.g., C-plane messages that do not need to be transmitted per slot or C-plane messages that are transmitted/received regardless of the C-plane transmission/reception window). Prior to, simultaneously with, or subsequently to the C-plane message, the RU 204 may obtain channel information for each antenna of the terminal based on the C-plane message of section type 6 or the C-plane message of section type X and perform SVD-based beamforming based on the C-plane message and channel information described above.

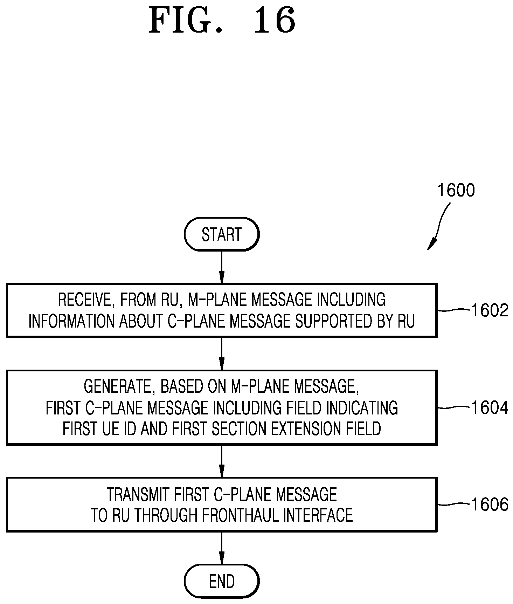

FIG. 16 illustrates a flowchart of a method for wireless communication performed by a DU according to an embodiment of the present disclosure.

Referring to FIG. 16, a method 1600 performed by the DU 202 may include operations 1602, 1604, and 1606. However, the present disclosure is not limited thereto, and operations 1602 to 1606 may be individually or collectively performed by any electronic device. The method according to an embodiment of the present disclosure is not limited to that illustrated in FIG. 16, and any of the operations illustrated in FIG. 16 may be omitted or operations not illustrated in FIG. 16 may be further included. In some embodiments, the order of at least some of operations 1602, 1604, and 1606 may be modified.

In operation 1602, the DU 202 may receive, from the RU 204, an M-plane message including information about a C-plane message supported by the RU 204. In operation 1604, based on the M-plane message, the DU 202 may generate a first C-plane message including a field indicating a first UE ID and a first section extension field. The first section extension field may include a parameter indicating the number of UE IDs of the user associated with the first UE ID. In operation 1606, the DU 202 may transmit the first C-plane message to the RU 204 through the fronthaul interface.

Additionally or alternatively, the first C-plane message may be a message that is transmitted regardless of the transmission/reception window for the control plane. The first C-plane message may not be a message that is transmitted on a symbol-by-symbol or slot-by-slot basis. The transmission period of the first C-plane message may be longer than the transmission period of the symbol or the transmission period of the slot. The first C-plane message may be transmitted at a period equal to or longer than the transmission period of the slot. The first C-plane message may be transmitted according to the SRS period (e.g., at the same period as the SRS transmission period).

Additionally or alternatively, the M-plane message may indicate that the RU 204 supports a C-plane message including a first section extension field together with any one of UE-specific channel information or information for requesting a channel estimation operation to the RU 204. For example, the M-plane message may indicate that the RU 204 supports a C-plane message of section extension 6 including a section extension 17 field (e.g., the C-plane message 1300 of FIG. 13). The M-plane message may indicate that the RU 204 supports a C-plane message of section extension X including a section extension 17 field (e.g., the C-plane message 1500 of FIG. 15).

Additionally or alternatively, the first C-plane message may further include a field indicating channel information corresponding to the first UE ID. For example, the first C-plane message may include a field indicating a particular ueId and a field indicating channel information corresponding to a particular ueId.

Additionally or alternatively, the first C-plane message may further include a channel estimation operation command to the RU 204. For example, the first C-plane message may include information for commanding (or instructing or requesting) the RU 204 to perform channel estimation. The first C-plane message may include information necessary to perform channel estimation. For example, the first C-plane message may include SRS information to support SRS-based channel estimation.

Additionally or alternatively, the method 1600 may include transmitting, to the RU 204 through the fronthaul interface, a second C-plane message including a second UE ID of the user of the first UE ID and a second section extension field. The second section extension field may include a parameter indicating the number of UE IDs corresponding to the user associated with the first UE ID. For example, the first UE ID and the second UE ID may be associated with the same user, and thus, the second section extension field may have the same value as the first section extension field.

Additionally or alternatively, the method 1600 may include an operation of transmitting, to the RU 204 through the fronthaul interface, a second C-plane message including a second UE ID of the user associated with the first UE ID. The field of the first C-plane message indicating the first UE ID may include least significant bits (LSBs) including three consecutive 0s. For example, the first C-plane message may include a ueId field with ueId[2:0]=0. The second C-plane message may not include a section extension field including a parameter indicating the number of UE IDs.

In an embodiment, when individually or collectively executed by the processor 302, one or more instructions stored in the memory 304 of the DU 202 may cause the DU 202 to perform any combination of the operations of the DU 202 described above.

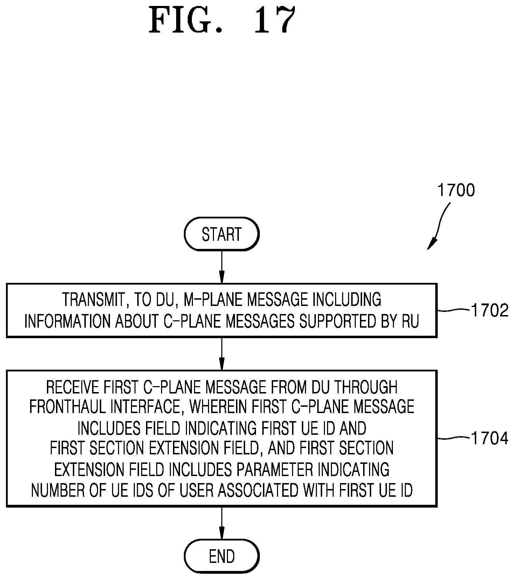

FIG. 17 illustrates a flowchart of a method for wireless communication performed by an RU according to an embodiment of the present disclosure.

Referring to FIG. 17, a method 1700 performed by the RU 204 may include operations 1702 and 1704. However, the present disclosure is not limited thereto, and operations 1702 and 1704 may be individually or collectively performed by any electronic device. The method according to an embodiment of the present disclosure is not limited to that illustrated in FIG. 17, and any of the operations illustrated in FIG. 17 may be omitted or operations not illustrated in FIG. 17 may be further included. In some embodiments, the order of at least some of operations 1702 and 1704 may be modified.

In operation 1702, the RU 204 may transmit, to the DU 202, an M-plane message including information about a C-plane message supported by the RU 204. In operation 1704, the RU 204 may receive a first C-plane message from the DU 202 through the fronthaul interface. The first C-plane message may include a field indicating a first UE ID and a first section extension field. The first section extension field may include a parameter indicating the number of UE IDs of the user associated with the first UE ID.

Additionally or alternatively, the method 1700 may further include an operation of performing SVD processing based on the first C-plane message. For example, the RU 204 may further perform at least some of operations 710 and 712 of FIG. 7 based on the first C-plane message. In an embodiment, the RU 204 may estimate one or more characteristics of a channel for each antenna of the terminal based on the UE ID indicated by the first C-plane message and the number of UE IDs of the corresponding user and perform SVD processing based on the estimation result.

Additionally or alternatively, the first C-plane message may be a message that is transmitted regardless of the reception window for the control plane. The first C-plane message may not be a message that is transmitted on a symbol-by-symbol basis. The transmission period of the first C-plane message may be longer than the transmission period of the symbol. The first C-plane message may be transmitted at a period equal to or longer than the transmission period of the slot. The first C-plane message may be transmitted according to the SRS period (e.g., at the same period as the SRS transmission period).

Additionally or alternatively, the M-plane message may indicate that the RU 204 supports a C-plane message including a first section extension field together with any one of UE-specific channel information or information for requesting a channel estimation operation to the RU 204. For example, the M-plane message may indicate that the RU 204 supports a C-plane message of section extension 6 including a section extension 17 field (e.g., the C-plane message 1300 of FIG. 14). The M-plane message may indicate that the RU 204 supports a C-plane message of section extension X including a section extension 17 field (e.g., the C-plane message 1500 of FIG. 15).

Additionally or alternatively, the first C-plane message may further include a field indicating channel information corresponding to the first UE ID. For example, the first C-plane message may include a field indicating a particular ueId and a field indicating channel information corresponding to a particular ueId.

Additionally or alternatively, the first C-plane message may further include a channel estimation operation command to the RU 204. For example, the first C-plane message may include information for commanding (or instructing or requesting) the RU 204 to perform channel estimation. The first C-plane message may include information necessary to perform channel estimation. For example, the first C-plane message may include SRS information to support SRS-based channel estimation. In response to the first C-plane message, the RU 204 may perform channel estimation.

Additionally or alternatively, the method 1700 may include an operation of receiving, from the DU 202 through the fronthaul interface, a second C-plane message including a second UE ID of the user of the first UE ID and a second section extension field. The second section extension field may include a parameter indicating the number of UE IDs corresponding to the user associated with the first UE ID. For example, the first UE ID and the second UE ID may be associated with the same user, and thus, the second section extension field may have the same value as the first section extension field.

Additionally or alternatively, the method 1700 may include an operation of receiving, from the DU 202 through the fronthaul interface, a second C-plane message including a second UE ID of the user associated with the first UE ID. The field of the first C-plane message indicating the first UE ID may include least significant bits (LSBs) including three consecutive 0s. For example, the first C-plane message may include a ueId field with ueId[2:0]=0. The second C-plane message may not include a section extension field including a parameter indicating the number of UE IDs.

In an embodiment, when individually or collectively executed by the processor 404, one or more instructions stored in the memory 402 of the RU 204 may cause the RU 204 to perform any combination of the operations of the RU 204 described above.

At least some of the methods according to an embodiment of the present disclosure may be embodied in the form of program commands executable through various computer means, which may be recorded on a computer-readable recording medium. The computer-readable recording medium may include program commands, data files, and data structures either alone or in combination. The program commands recorded on the computer-readable recording medium may be those that are especially designed and configured for the present disclosure, or may be those that are known and available to those of ordinary skill in computer software. Examples of the computer-readable recording medium include magnetic media such as hard disks, floppy disks, or magnetic tapes, optical media such as CD-ROMs or DVDs, and magneto-optical media such as floptical disks, and hardware devices such ROMs, RAMs, or flash memories specially configured to store and execute program commands. Examples of the program commands include machine language codes that may be generated by a compiler, and high-level language codes that may be executed by a computer by using an interpreter.

The machine-readable storage medium may be provided in the form of a non-transitory storage medium. Here, the term "non-transitory storage medium" may mean that the storage medium is a tangible device and does not include signals (e.g., electromagnetic waves), and may mean that data may be semipermanently or temporarily stored in the storage medium. For example, the "non-transitory storage medium" may include a buffer in which data is temporarily stored.

According to an embodiment of the present disclosure, the method according to various embodiments of the present disclosure described herein may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user devices (e.g., smartphones). In the case of online distribution, at least a portion of the computer program product (e.g., a downloadable app) may be at least temporarily stored or temporarily generated in a machine-readable storage medium such as a memory of a manufacturer server, a memory of an application store server, or a memory of a relay server.

While certain embodiments of the present disclosure have been described above with reference to the drawings, those of ordinary skill in the art may make various changes and modifications therein from the above description. For example, suitable results may be achieved even when the described technologies are performed in a different order from the described method and/or the components of the described computer system or module are coupled or combined in a different form from the described method or are replaced or substituted by other components or equivalents.

**Claims**

**1.** A method for wireless communication performed by a distributed unit (DU) (202), the method comprising:

receiving, from a radio unit (RU) (204), a management-plane message including information about a control-plane message supported by the RU;
generating, based on the management-plane message, a first control-plane message including a field indicating a first user equipment identifier (UE ID) and a first section extension field; and
transmitting the first control-plane message to the RU through a fronthaul interface,
wherein the first section extension field includes a parameter indicating a number of UE IDs of a user associated with the first UE ID, and the first control-plane message is transmitted at a period longer than a slot.

2. The method of claim 1, wherein the first control-plane message is transmitted regardless of a transmission window for a control plane.

3. The method of claim 1 or 2, wherein the management-plane message indicates that the RU supports the control-plane message including the first section extension field together with any one of UE-specific channel information or information for requesting a channel estimation operation to the RU.

4. The method of any one of claims 1 to 3, wherein the first control-plane message further includes a field indicating channel information corresponding to the first UE ID.

5. The method of any one of claims 1 to 3, wherein the first control-plane message further includes a channel estimation operation command to the RU.

6. The method of any one of claims 1 to 5, further comprising transmitting, to the RU through the fronthaul interface, a second control-plane message including a second UE ID of the user associated with the first UE ID and a second section extension field,
wherein the second section extension field includes a parameter indicating a number of UE IDs corresponding to the user.

7. The method of any one of claims 1 to 5, further comprising transmitting, to the RU through the fronthaul interface, a second control-plane message including a second UE ID of the user associated with the first UE ID,
wherein the field indicating the first UE ID includes least significant bits (LSBs) including three consecutive 0s.

8. A method for wireless communication performed by a radio unit (RU) (204),
the method comprising:

transmitting, to a distributed unit (DU) (202), a management-plane message including information about a control-plane message supported by the RU; and
receiving a first control-plane message from the DU through a fronthaul interface,
wherein the first control-plane message includes a field indicating a first user equipment identifier (UE ID) and a first section extension field, and
the first section extension field includes a parameter indicating a number of UE IDs of a user associated with the first UE ID, and the first control-plane message is transmitted at a period longer than a slot.

9. The method of claim 8, further comprising performing singular value decomposition (SVD), based on the first control-plane message.

10. The method of claim 8 or 9, wherein the first control-plane message is received regardless of a reception window for a control plane.

11. The method of any one of claims 8 to 10, wherein the management-plane message indicates that the RU supports the control-plane message including the first section extension field together with any one of UE-specific channel information or information for requesting a channel estimation operation to the RU.

12. The method of any one of claims 8 to 11, wherein the first control-plane message further includes a field indicating channel information corresponding to the first UE ID.

13. The method of any one of claims 8 to 11, wherein the first control-plane message further includes a channel estimation operation command to the RU.

14. The method of any one of claims 8 to 13, further comprising receiving, from the DU through the fronthaul interface, a second control-plane message including a second UE ID of the user associated with the first UE ID and a second section extension field,
wherein the second section extension field includes a parameter indicating a number of UE IDs corresponding to the user.

15. The method of any one of claims 8 to 13, further comprising receiving, from the DU through the fronthaul interface, a second control-plane message including a second UE ID of the user associated with the first UE ID,

wherein the field indicating the first UE ID includes least significant bits (LSBs) including three consecutive 0s.

# FIG. 1

# FIG. 2

# FIG. 3

202

DU

302

PROCESSOR

MEMORY — 304

TRANSCEIVER — 306

# FIG. 4

# FIG. 5

# FIG. 6

# FIG. 7

202

DU

204

RU

702

TRANSMIT M-PLANE MESSAGE INCLUDING INFORMATION
ABOUT C-PLANE MESSAGE SUPPORTED BY RU

IDENTIFY WHETHER CHANNEL
INFORMATION IS IN DU — 704

GENERATE FIRST C-PLANE
MESSAGE INCLUDING FIELD
INDICATING FIRST UE ID AND
FIRST SECTION EXTENSION FIELD — 706

708

TRANSMIT FIRST C-PLANE MESSAGE
THROUGH FRONTHAUL INTERFACE

PERFORM SVD PROCESSING — 710

PERFORM BEAMFORMING — 712

# FIG. 8

| 0 (msb) | 1 | 2 | 3 | 4 | 5 | 6 | 7 (lsb) | # of bytes | |
|---|---|---|---|---|---|---|---|---|---|
| Transport header | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | | startsymbolId | | | | | 1 | Octet 12 |
| Ofsections | | | | | | | | 1 | Octet 13 |
| sectionType = 5 | | | | | | | | 1 | Octet 14 |
| udCompHdr | | | | | | | | 1 | Octet 15 |
| Reserved | | | | | | | | 1 | Octet 16 |
| sectionId | | | | | | | | 1 | Octet 17 |
| sectionId | | | | rb | symInc | startPrbu | | 1 | Octet 18 |
| startPrbu | | | | | | | | 1 | Octet 19 |
| numPrbu | | | | | | | | 1 | Octet 20 |
| reMask[11:4] | | | | | | | | 1 | Octet 21 |
| reMask[3:0] | | | | numSymbol | | | | 1 | Octet 22 |
| ef | ueId[14:8] | | | | | | | 1 | Octet 23 |
| ueId[7:0] | | | | | | | | 1 | Octet 24 |
| Section extensions as indicated by "ef" | | | | | | | | var | Octet 25 |
| ... | | | | | | | | | |
| sectionId | | | | | | | | 1 | Octet N |
| sectionId | | | | rb | symInc | startPrbu | | 1 | N+1 |
| startPrbu | | | | | | | | 1 | N+2 |
| numPrbu | | | | | | | | 1 | N+3 |
| reMask[11:4] | | | | | | | | 1 | N+4 |
| reMask[3:0] | | | | numSymbol | | | | 1 | N+5 |
| ef | ueId[14:8] | | | | | | | 1 | N+6 |
| ueId[7:0] | | | | | | | | 1 | N+7 |
| Section extensions as indicated by "ef" | | | | | | | | var | N+8 |

800

802

804

806

808

810

EP 4 769 969 A1

37

# FIG. 9

900

| 0 (msb) | 1 | 2 | 3 | 4 | 5 | 6 | 7 (lsb) | # of bytes | |
|---|---|---|---|---|---|---|---|---|---|
| ef | extType = 0x0A | | | | | | | 1 | Octet N |
| extLen | | | | | | | | 1 | N+1 |
| Reserved | 2nd port ueld[14:8] | | | | | | | 1 | N+2 |
| 2nd port ueld[7:0] | | | | | | | | 1 | N+3 |
| ... | | | | | | | | ... | ... |
| reserved | (numPortc+1)th port ueld[14:8] | | | | | | | 1 | var |
| (numPortc+1)th port ueld[7:0] filter to ensure 4-byte boundary | | | | | | | | var | var |

# FIG. 10

1000

| 0 (msb) | 1 | 2 | 3 | 4 | 5 | 6 | 7 (lsb) | # of bytes | |
|---|---|---|---|---|---|---|---|---|---|
| ef | extType = 0x11 | | | | | | | 1 | Octet N |
| extLen | | | | | | | | 1 | N+1 |
| numUeID of 1st user | | | | numUeID of 2nd user | | | | var | N+2 |
| ... | | | | | | | | ... | ... |
| ... | | | | numUeID of last user | | | | | |
| Zero padding to ensure 4-byte boundary | | | | | | | | | |

EP 4 769 969 A1

# FIG. 11

t=-T1a_max_cp_dl
Start of Tx window
C-plane DL

t=-T1a_min_cp_dl
End of Tx window
C-plane DL

$t_{DL} = 0$

Tx window
C-plane DL
1104

202 — DU

C-plane data
for symbol #n

C

1106

FH

204 — RU

t=-T2a_min_cp_dl
End of Rx window
C-plane DL

T2a_min_cp_dl

C

Symbol #n
processing

Symbol #n+1
processing

Rx window C-plane DL
1108

1102 — Antenna port

| Symbol #n−2 | Symbol #n−1 | Symbol #n | Symbol #n+1 |

t=-T2a_max_cp_dl
Start of Rx window
C-plane DL

DL frame timing at antenna ports
(air interface)

EP 4 769 969 A1

# FIG. 12

| 0 (msb) | 1 | 2 | 3 | 4 | 5 | 6 | 7 (lsb) | # of bytes | |
|---------|---|---|---|---|---|---|---------|-----------|---|
| Transport header | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | startsymbolId | | | | | | 1 | Octet 12 |
| numberOfsections | | | | | | | | 1 | Octet 13 |
| sectionType = 6 | | | | | | | | 1 | Octet 14 |
| numberOfUEs | | | | | | | | 1 | Octet 15 |
| Reserved | | | | | | | | 1 | Octet 16 |
| ef | ueId[14:8] | | | | | | | 1 | Octet 17 |
| ueId[7:0] | | | | | | | | 1 | Octet 18 |
| regularizationFactor | | | | | | | | 1 | Octet 19 |
| Reserved | | | | rb | symInc | startPrbc | | 1 | Octet 21 |
| startPrbc | | | | | | | | 1 | Octet 22 |
| numPrbc | | | | | | | | 1 | Octet 23 |
| ciIsample (first PRB, first antenna) | | | | | | | | 1 | Octet 24 |
| ciQsample (first PRB, first antenna) | | | | | | | | var | |
| ... | | | | | | | | var | |
| ciIsample (first PRB, last antenna) | | | | | | | | var | |
| ciQsample (first PRB, last antenna) | | | | | | | | var | |
| ... | | | | | | | | var | |
| ciIsample (last PRB, last antenna) | | | | | | | | var | |
| ciQsample (last PRB, last antenna) | | | | | | | | var | |
| Section extensions as indicated by "ef" | | | | | | | | var | |
| ... | | | | | | | | | |

EP 4 769 969 A1

# FIG. 13

| 0 (msb) | 1 | 2 | 3 | 4 | 5 | 6 | 7 (lsb) | # of bytes | |
|---|---|---|---|---|---|---|---|---|---|
| Transport header | | | | | | | | 8 | Octet 1 |
| Timing header | | | | | | | | 6 | Octet 9 |
| numberOfUEs | | | | | | | | 2 | Octet 15 |
| ef | ueId[14:8] | | | | | | | 1 | Octet 17 |
| ueId[7:3] | | | | | ueId[2:0] | | | 1 | Octet 18 |
| regularizationFactor | | | | | | | | 2 | Octet 19 |
| reserved | | | | rb | symInc | startPrbc | | 1 | Octet 21 |
| startPrbc | | | | | | | | 1 | Octet 22 |
| numPrbc | | | | | | | | 1 | Octet 23 |
| Channel information | | | | | | | | var | Octet 24 |
| ef | extType = 0x11 | | | | | | | 1 | Octet N |
| extLen | | | | | | | | 1 | N+1 |
| numUeID of user corresponding to ueId[14:3] | | | | Reserved | | | | var | N+2 |
| Zero padding to ensure 4-byte boundary | | | | | | | | | |

1300

1302

1304

1306

1308

1310

1312

EP 4 769 969 A1

42

FIG. 14

| 0 (msb) | 1 | 2 | 3 | 4 | 5 | 6 | 7 (lsb) | # of bytes | |
|---|---|---|---|---|---|---|---|---|---|
| Transport header | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | startsymbolid | | | | | | 1 | Octet 12 |
| numberOfsections | | | | | | | | 1 | Octet 13 |
| sectionType = X | | | | | | | | 1 | Octet 14 |
| udCompHdr | | | | | | | | 1 | Octet 15 |
| Reserved | | | | | | | | 1 | Octet 16 |
| sectionId | | | | | | | | 1 | Octet 17 |
| sectionId | | | rb | symInc | startPrbu | | | 1 | Octet 18 |
| startPrbu | | | | | | | | 1 | Octet 19 |
| numPrbu | | | | | | | | 1 | Octet 20 |
| SRS setup information | | | | | | | | var | var |
| ef | ueId[14:8] | | | | | | | 1 | var |
| ueId[7:0] | | | | | | | | 1 | var |
| Section extensions as indicated by "ef" | | | | | | | | var | var |

1400
1402
1404
1406
1408

# FIG. 15

| 0 (msb) | 1 | 2 | 3 | 4 | 5 | 6 | 7 (lsb) | # of bytes | |
|---|---|---|---|---|---|---|---|---|---|
| Transport header | | | | | | | | 8 | Octet 1 |
| Timing header | | | | | | | | 6 | Octet 9 |
| udCompHdr | | | | | | | | 2 | Octet 15 |
| sectionId | | | | | | | | 1 | Octet 17 |
| sectionId | | | rb | symInc | | startPrbc | | 1 | Octet 18 |
| startPrbc | | | | | | | | 1 | Octet 19 |
| numPrbc | | | | | | | | 1 | Octet 20 |
| SRS setup information | | | | | | | | var | var |
| ef | ueId[14:8] | | | | | | | 1 | var |
| ueId[7:3] | | | | | ueId[2:0] | | | 1 | var |
| ef | extType = 0x11 | | | | | | | 1 | Octet N |
| extLen | | | | | | | | 1 | N+1 |
| numUeID of user corresponding to ueId[14:3] | | | | Reserved | | | | var | N+2 |
| Zero padding to ensure 4-byte boundary | | | | | | | | | |

Octet 1 → 1502
Octet 9 → 1504
Octet 15 → 1506
1508
1510
1500

EP 4 769 969 A1

# FIG. 16

1600

START

RECEIVE, FROM RU, M-PLANE MESSAGE INCLUDING INFORMATION ABOUT C-PLANE MESSAGE SUPPORTED BY RU ——1602

GENERATE, BASED ON M-PLANE MESSAGE, FIRST C-PLANE MESSAGE INCLUDING FIELD INDICATING FIRST UE ID AND FIRST SECTION EXTENSION FIELD ——1604

TRANSMIT FIRST C-PLANE MESSAGE TO RU THROUGH FRONTHAUL INTERFACE ——1606

END

# FIG. 17

1700

START

TRANSMIT, TO DU, M-PLANE MESSAGE INCLUDING
INFORMATION ABOUT C-PLANE MESSAGES SUPPORTED BY RU —1702

RECEIVE FIRST C-PLANE MESSAGE FROM DU THROUGH
FRONTHAUL INTERFACE, WHEREIN FIRST C-PLANE MESSAGE
INCLUDES FIELD INDICATING FIRST UE ID AND
FIRST SECTION EXTENSION FIELD, AND FIRST SECTION —1704
EXTENSION FIELD INCLUDES PARAMETER INDICATING
NUMBER OF UE IDS OF USER ASSOCIATED WITH FIRST UE ID

END

## INTERNATIONAL SEARCH REPORT

| | International application No. |
|---|---|
| | **PCT/KR2024/096952** |

| **A.** | **CLASSIFICATION OF SUBJECT MATTER** |
|---|---|

**H04B 7/06**(2006.01)i; **H04L 5/00**(2006.01)i; **H04L 25/02**(2006.01)i; **H04W 88/08**(2009.01)i; **H04W 92/20**(2009.01)i

According to International Patent Classification (IPC) or to both national classification and IPC

| **B.** | **FIELDS SEARCHED** |
|---|---|

Minimum documentation searched (classification system followed by classification symbols)

H04B 7/06(2006.01); H04B 7/024(2017.01); H04B 7/0413(2017.01); H04B 7/0417(2017.01); H04L 1/18(2006.01); H04W 16/26(2009.01); H04W 72/04(2009.01); H04W 72/12(2009.01); H04W 88/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DU (distributed unit), RU (radio unit), 제어 평면 (control-plane), 관리 평면 (management-plane), UE ID (user equipment identifier), 프론트홀 (fronthaul)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-2022-0037305 A (SAMSUNG ELECTRONICS CO., LTD.) 24 March 2022 (2022-03-24)<br>See paragraphs [0011]-[0222]. | 1-5,8-13 |
| A | | 6,7,14,15 |
| Y | KR 10-2022-0037318 A (SAMSUNG ELECTRONICS CO., LTD.) 24 March 2022 (2022-03-24)<br>See paragraphs [0100]-[0122]. | 1-5,8-13 |
| Y | KR 10-2023-0168146 A (ELECTRONICS AND TELECOMMUNICATIONS RESEARCH INSTITUTE) 12 December 2023 (2023-12-12)<br>See paragraphs [0060]-[0070]. | 9 |
| A | JP 2023-532651 A (COMMSCOPE TECHNOLOGIES LLC) 31 July 2023 (2023-07-31)<br>See claims 1-18. | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 March 2025** | **19 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/096952**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2023-0071127 A (QUALCOMM INCORPORATED) 23 May 2023 (2023-05-23) See claims 1-13. | 1-15 |

Form PCT/ISA/210 (second sheet) (July 2022)

**INTERNATIONAL SEARCH REPORT**
Information on patent family members

International application No.

**PCT/KR2024/096952**

| Patent document cited in search report | | | Publication date (day/month/year) | Patent family member(s) | | | Publication date (day/month/year) |
|---|---|---|---|---|---|---|---|
| KR | 10-2022-0037305 | A | 24 March 2022 | AU | 2021-343338 | A1 | 24 March 2022 |
| | | | | CN | 116158166 | A | 23 May 2023 |
| | | | | EP | 4203588 | A1 | 28 June 2023 |
| | | | | EP | 4203588 | A4 | 28 February 2024 |
| | | | | JP | 2023-542177 | A | 05 October 2023 |
| | | | | US | 2023-0224118 | A1 | 13 July 2023 |
| | | | | WO | 2022-060180 | A1 | 24 March 2022 |
| KR | 10-2022-0037318 | A | 24 March 2022 | CN | 116195291 | A | 30 May 2023 |
| | | | | EP | 4199629 | A1 | 21 June 2023 |
| | | | | EP | 4199629 | A4 | 20 March 2024 |
| | | | | US | 2023-0224919 | A1 | 13 July 2023 |
| | | | | WO | 2022-060190 | A1 | 24 March 2022 |
| KR | 10-2023-0168146 | A | 12 December 2023 | KR | 10-2660123 | B1 | 23 April 2024 |
| | | | | US | 2023-0396293 | A1 | 07 December 2023 |
| JP | 2023-532651 | A | 31 July 2023 | EP | 4173346 | A1 | 03 May 2023 |
| | | | | KR | 10-2023-0031227 | A | 07 March 2023 |
| | | | | US | 12022301 | B2 | 25 June 2024 |
| | | | | US | 12082003 | B2 | 03 September 2024 |
| | | | | US | 2021-0409977 | A1 | 30 December 2021 |
| | | | | US | 2024-0349085 | A1 | 17 October 2024 |
| | | | | WO | 2022-006106 | A1 | 06 January 2022 |
| KR | 10-2023-0071127 | A | 23 May 2023 | CN | 116235438 | A | 06 June 2023 |
| | | | | EP | 4218176 | A1 | 02 August 2023 |
| | | | | US | 12028748 | B2 | 02 July 2024 |
| | | | | US | 2022-0095160 | A1 | 24 March 2022 |
| | | | | WO | 2022-066735 | A1 | 31 March 2022 |

Form PCT/ISA/210 (patent family annex) (July 2022)